(19) Europäisches Patentamt
European Patent Office
Office européen des brevets

(11) **EP 4 682 177 A1**

(12) **EUROPEAN PATENT APPLICATION**
published in accordance with Art. 153(4) EPC

(43) Date of publication:
**21.01.2026 Bulletin 2026/04**

(21) Application number: **24770875.3**

(22) Date of filing: **12.03.2024**

(51) International Patent Classification (IPC):
**C08F 2/01** (2006.01)    **C08F 2/34** (2006.01)
**C08F 210/06** (2006.01)

(52) Cooperative Patent Classification (CPC):
**C08F 2/01; C08F 2/34; C08F 10/06; C08F 210/06**

(86) International application number:
**PCT/JP2024/009514**

(87) International publication number:
**WO 2024/190770 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2023 JP 2023038482**

(71) Applicant: **Japan Polypropylene Corporation
Tokyo 100-8251 (JP)**

(72) Inventors:
• **SUZUKI, Kenji
Yokkaichi-shi, Mie 510-0848 (JP)**

• **MIYATA, Shoji
Kamisu-shi Ibaraki 314-0102 (JP)**
• **SATO, Taiki
Ichihara-shi, Chiba 290-8551 (JP)**
• **TSUCHIYA, Manabu
Kamisu-shi Ibaraki 314-0102 (JP)**
• **IDA, Shoichi
Yokkaichi-shi, Mie 510-0848 (JP)**

(74) Representative: **Hoffmann Eitle
Patent- und Rechtsanwälte PartmbB
Arabellastraße 30
81925 München (DE)**

(54) **METHOD FOR PRODUCING PROPYLENE POLYMER**

(57)     A method for producing a propylene-based polymer, wherein a propylene-based polymer is polymerized in the presence of a catalyst with a cylindrical horizontal polymerization reactor comprising an agitating mechanism rotatable around a horizontal axis inside the reactor, by a continuous gas phase polymerization which removes reaction heat by vaporization heat of a liquefied monomer-containing liquid; the catalyst is fed from an upper part of one end of the horizontal polymerization reactor; and the propylene-based polymer is discharged from a lower part of the other end of the horizontal polymerization reactor; wherein the method comprises: a temperature measuring step in which a temperature distribution of the cylindrical horizontal polymerization reactor in a circumferential direction, is measured so that a distance between adjacent measurement points is a central angle of $\pi/10$ (rad) or less, a calculating step in which a specific temperature distribution parameter (A) is calculated from the temperature distribution obtained by the temperature measuring step, and a monitoring step in which the temperature distribution parameter (A) is monitored so that the parameter is prevented from exceeding a predetermined value.

EP 4 682 177 A1

**Description**

Technical Field

The present invention relates to a method for producing a propylene-based polymer. More specifically, it relates to a polymerization method configured to, in the polymerization of propylene using a cylindrical horizontal polymerization reactor, suppress the formation of aggregated polymers and stably produce a propylene-based polymer for a long-term by monitoring a specific temperature distribution parameter calculated by measuring the temperature distribution of the reactor in the circumferential direction.

Background Art

Propylene-based polymers are used in a wide range of industrial applications since they have excellent mechanical properties such as rigidity and heat resistance and good moldability; they can be produced at relatively low costs; and they have high adaptability to environmental problems.

Therefore, the production process of polypropylene has been technically investigated continuously from the viewpoints of simplifying its steps, reducing production costs, improving productivity, and improving catalyst performance.

In the production process of polypropylene, with remarkable advance in catalyst performance, the necessity of removal of a catalyst residue, an atactic polymer and the like has been reduced. Currently, a gas phase process is a mainstream.

In the gas phase process, recently, a highly activated type catalyst as typified by a supported catalyst has been generally used. Application of novel catalysts (e.g., a highly activated catalyst and a metallocene-based catalyst) developed in recent progress in the catalyst technology to the process and suppression of aggregated polymer formation and reduction of fine powder formation, both of which are associated with the application, are problems that should be solved from the viewpoint of stable operation of the process.

For preventing the formation of aggregated formless polymers in the gas phase polymerization, removal of polymerization heat is relatively difficult in the catalyst feed part of a fluid bed reactor, and the temperature of the inside of the fluid bed is likely to be unstable by local accumulation of the polymerization heat. Therefore, there has been proposed a polypropylene production method wherein the temperature and pressure of the inside of a gas phase polymerization reactor are controlled by the liquid flow rate of a liquefied circulating gas returning to the reactor, the flow rate of a discharged gas discharged to the outside of the system, and the flow rate of a fed monomer gas, utilizing vaporization heat using the fluid bed reactor (for example, see Patent Document 1). However, the production method still has room for improvement in the removal of the polymerization heat in the fluid bed reactor upon an increase in production and a rapid change in grade.

Moreover, for the purpose of suppressing the formation of aggregated polymers and retaining a fluid state, there has been proposed a gas phase polymerization method characterized in that the inner wall temperature of a fluid bed reactor is cooled to the dew point of a fluid gas or lower upon polymerization in the reactor (for example, see Patent Document 2). However, the inventors of the present invention have recognized that difficulty is involved in operation control because of local phase change.

For the purpose of being able to perform stable, long-term gas phase olefin polymerization, Patent Document 3 discloses a fluidized bed type polymerization apparatus furnished with an infrared type thermometer and a controller, wherein the infrared type thermometer measures the temperature distribution of the outer wall surface of the polymerization apparatus from a predetermined measurement distance, and the controller stores the target temperature distribution value of the outer wall surface of the polymerization apparatus in advance, displays the temperature distribution measured by the infrared type thermometer, performs a comparison operation between the target temperature distribution value and the measured temperature distribution of the outer wall surface, and changes polymerization conditions so as to meet the target. However, the inventors of the present invention have recognized the following: in the case of measuring the temperature distribution of the outer wall surface from a predetermined measurement distance by the infrared type thermometer, the measurement is susceptible to the influence of heat dissipation or outside temperature; the accuracy of temperature control is likely to decrease; and the accuracy of temperature control further decreases when the reactor is covered with an insulating material.

On the other hand, as a gas phase process, there is known a polymerization process in which a horizontal polymerization reactor comprising an agitator that is rotatable around a horizontal axis, is used as an olefin gas phase reactor in which polymerization heat is removed utilizing the vaporization heat of liquefied propylene. The method for removing the polymerization heat utilizing the vaporization heat of liquefied propylene, is advantageous in that a large heat-removing ability can be realized by a small facility.

In the case of utilizing the vaporization heat of liquefied propylene, generally, a gas is discharged from the reactor; the discharged gas is liquefied by cooling with a heat exchanger; and the liquefied gas is returned to the reactor. Since the liquefying temperature of gas (dew point) depends on pressure and the gas composition, when propylene is mixed with a gas component having a lower dew point than propylene, such as hydrogen or ethylene, the dew point decreases as the amount of the mixed gas component increases. The cooling ability of the heat exchanger is determined by a facility and, in the case where the same facility is used, the lower the dew point of the gas component, the lower the ability to liquefy the gas, i.e., the ability of heat removal.

Accordingly, in the production process where large amounts of hydrogen or ethylene is present in the reactor, such as the production process of a propylene-based polymer having a high melt flow rate or a random polymer using a novel catalyst such as a highly activated catalyst or a metallocene catalyst, catalyst activity is enhanced; however, the formation of the aggregated polymers owing to the decrease in the heat-removing ability is inevitable.

To cope with such problems, there has been proposed a method for suppressing a polymer aggregate by separating a titanium-supported catalyst component feed port from a co-catalyst component feed port in a horizontal polymerization reactor (for example, see Patent Document 4). There has been also proposed a method for suppressing aggregated formless polymers by a pre-polymerization treatment with an $\alpha$-olefin and donor addition (for example, see Patent Document 5).

The inventors of the present invention proposed a method for continuously producing a propylene-based polymer, especially a low-crystalline propylene-based polymer by a gas-phase polymerization process to remove the reaction heat mainly by the vaporization heat of liquefied propylene, while keeping the good fluidity of the polymer and reducing the aggregated polymer formation which inhibits the stable operation of the process, both by limiting the recycling gas temperature of the vaporized propylene to be supplied to the reactor to a specific temperature (Patent Document 6).

In addition, the inventors of the present invention proposed a method for industrially and stably producing a propylene-based polymer that is excellent in transparency and low-temperature heat sealing properties, as well as suppressing the formation of aggregated polymers and achieving an improvement in production efficiency, by a process of continuously producing a propylene-based polymer using a horizontal polymerization reactor in which, among the temperature conditions of the inside of the polymerization reactor, the temperature difference $\Delta T1$ (°C) (= Tx - Tz) between the temperature (Tx) of an area including a catalyst feed part and the dew point (Tz) of a mixed gas in the reactor is set to 0°C to 5°C (Patent Document 7).

Meanwhile, Patent Document 8 discloses an apparatus for measuring the temperature of the inside of the reactor of a gasification apparatus using an optical pyrometer.

Citation List

Patent Documents

Patent Document 1: Japanese Patent Application Laid-Open (JP-A) No. H11-209415
Patent Document 2: Japanese Patent No. 3,180,305
Patent Document 3: JP-A No. H11-189603
Patent Document 4: Japanese Examined Patent Application Publication No. H7-94485
Patent Document 5: International Publication No. WO2000/42081
Patent Document 6: JP-A No. 2009-73890
Patent Document 7: JP-A No. 2011-148980
Patent Document 8: Japanese translation of PCT International Application No. 2001-521144

Summary

Technical Problem

However, a continuous gas phase polymerization process using a cylindrical horizontal polymerization reactor in which reaction heat is removed by the vaporization heat of a liquefied monomer-containing liquid, is sometimes insufficient in suppressing the formation of aggregated polymers even under the conditions of Patent Document 7. Accordingly, technical improvement in suppressing the formation of aggregated polymers and achieving an improvement in production efficiency has been desired.

As mentioned above, in the conventional art, there has not been realized a technique that can fully achieve an object such as suppressing the formation of aggregated polymers and stably producing a propylene-based polymer for a long term by a continuous gas phase polymerization process using a cylindrical horizontal polymerization reactor in which reaction heat is removed by the vaporization heat of a liquefied monomer-containing liquid. Further technical improvement has been desired from such a viewpoint.

In light of the above circumstances, an object of the present invention is to provide a method for producing a propylene-based polymer, which is configured to suppress the formation of aggregated polymers and exert excellent long-term operability by a continuous gas phase polymerization process using a cylindrical horizontal polymerization reactor in which reaction heat is removed by the vaporization heat of a liquefied monomer-containing liquid.

Solution to Problem

In the continuous gas phase polymerization process using the cylindrical horizontal polymerization reactor in which the reaction heat is removed by the vaporization heat of the liquefied monomer-containing liquid, aggregated polymers are sometimes formed even when the difference between the dew point of a mixed gas in the reactor and the polymerization temperature of the catalyst feed part is decreased and continuous polymerization is operated in the same manner as Patent Document 7. In this respect, the inventors of the present invention conducted research into what happens in the inside of the reactor when aggregated polymers are formed therein.

Based on this research, the inventors of the present invention found the following: the method for producing a propylene-based polymer configured to suppress the formation of aggregated polymers and exert excellent long-term operability, can be achieved by measuring the temperature distribution of the cylindrical horizontal polymerization reactor in the circumferential direction so that the distance between adjacent measurement points is a central angle of $\pi/10$ (rad) or less in real time during the continuous polymerization operation, calculating the temperature distribution as a specific temperature parameter, and monitoring the specific temperature parameter. Based on this finding, the inventors finally achieved the present invention.

That is, the present invention encompasses the following embodiments.

[1] A method for producing a propylene-based polymer,

wherein a propylene-based polymer is polymerized from propylene or propylene and an $\alpha$-olefin other than propylene in the presence of a catalyst with a cylindrical horizontal polymerization reactor comprising an agitating mechanism rotatable around a horizontal axis inside the reactor, by a continuous gas phase polymerization which removes reaction heat by vaporization heat of a liquefied monomer-containing liquid; the catalyst is fed from an upper part of one end of the horizontal polymerization reactor; and the propylene-based polymer is discharged from a lower part of the other end of the horizontal polymerization reactor;
wherein the method comprises:

a temperature measuring step in which a temperature distribution of the cylindrical horizontal polymerization reactor in a circumferential direction, is measured so that a distance between adjacent measurement points is a central angle of $\pi/10$ (rad) or less,
a calculating step in which a temperature distribution parameter (A) defined by the following formula 1 is calculated from the temperature distribution obtained by the temperature measuring step, and
a monitoring step in which the temperature distribution parameter (A) is monitored so that the parameter is prevented from exceeding a predetermined value; and
wherein the method optionally further comprises at least one selected from the group consisting of:

a condition controlling step (1) in which a production condition is controlled so that the temperature distribution parameter (A) is prevented from exceeding the predetermined value, and
a condition controlling step (2) in which, when the temperature distribution parameter (A) exceeds the predetermined value, the production condition is controlled so that the temperature distribution parameter (A) is equal to or less than the predetermined value:

$$A = Th \times \theta w \quad (Formula\ 1)$$

(where $Th = Tp - Tave$; $Ti$ is a temperature (°C) of an i-th measurement point (where i is an integer of from 1 to n, and n is a number of the measurement points in the circumferential direction); $Tp$ is a highest temperature (°C) among $Ti$'s; $Tave$ is an average temperature (°C) of $Ti$'s; and $\theta w$ is a sum (rad) of central angles of adjacent measurement points which have a difference between $Ti$ and $Tave$ ($Ti - Tave$) of 0.5°C or more and which include the measurement point with $Tp$.)

[2] A method for producing a propylene-based polymer,

wherein a propylene-based polymer is polymerized from propylene or propylene and an α-olefin other than propylene in the presence of a catalyst with a cylindrical horizontal polymerization reactor comprising an agitating mechanism rotatable around a horizontal axis inside the reactor, by a continuous gas phase polymerization which removes reaction heat by vaporization heat of a liquefied monomer-containing liquid; the catalyst is fed from an upper part of one end of the horizontal polymerization reactor; and the propylene-based polymer is discharged from a lower part of the other end of the horizontal polymerization reactor;
wherein the method comprises:

a temperature measuring step in which a part of a temperature distribution of the cylindrical horizontal polymerization reactor in a circumferential direction, is measured so that a distance between adjacent measurement points is a central angle of $\pi/10$ (rad) or less,
a calculating step in which a temperature distribution parameter (As) defined by the following formula 2 is calculated from the temperature distribution obtained by the temperature measuring step, and
a monitoring step in which the temperature distribution parameter (As) is monitored so that the parameter is prevented from exceeding a predetermined value; and
wherein the method optionally further comprises at least one selected from the group consisting of:

a condition controlling step (1') in which a production condition is controlled so that the temperature distribution parameter (As) is prevented from exceeding the predetermined value, and
a condition controlling step (2') in which, when the temperature distribution parameter (As) exceeds the predetermined value, the production condition is controlled so that the temperature distribution parameter (As) is equal to or less than the predetermined value:

$$As = Th_s \times \theta w_s \quad (Formula\ 2)$$

(where $Th_s = Tp - Tref$; Ti is a temperature (°C) of an i-th measurement point (where i is an integer of from 1 to n, and n is a number of the measurement points in the circumferential direction); Tp is a highest temperature (°C) among Ti's; Tref is a predetermined reference temperature (°C); and $\theta w_s$ is a sum (rad) of central angles of adjacent measurement points which a difference between Ti and Tref (Ti - Tref) is equal to or more than a predetermined temperature and which include the measurement point with Tp.)

[3] The method for producing the propylene-based polymer according to the above [1] or [2], wherein, in the temperature measuring step, the temperature distribution is measured at least in the circumferential direction of a catalyst feed part of the horizontal polymerization reactor.

[4] The method for producing the propylene-based polymer according to any one of the above [1] to [3], wherein, in the temperature measuring step, the temperature distribution is measured on an outer surface of the horizontal polymerization reactor.

[5] The method for producing the propylene-based polymer according to any one of the above [1] to [4], wherein, in the temperature measuring step, the temperature distribution is measured so that the distance between the adjacent measurement points is in a range of from 10 mm to 1000 mm.

[6] The method for producing the propylene-based polymer according to any one of the above [1] to [5], wherein, in the temperature measuring step, a temperature profile is created by plotting the temperatures measured at the measurement points in the circumferential direction on a circular coordinate system, using radial coordinate r as temperature and angular coordinate θ as a position of each of the measurement points in the circumferential direction.

[7] The method for producing the propylene-based polymer according to any one of the above [1] to [6], wherein the predetermined value is set in a range of from 0π to 30π.

[8] The method for producing the propylene-based polymer according to any one of the above [1] to [7], wherein a rotational speed of the agitating mechanism is from 5 rpm to 50 rpm.

[9] The method for producing the propylene-based polymer according to any one of the above [1] to [8], wherein a temperature difference ΔT1 (°C) (= Tx - Tz) between a temperature (Tx) of an area of the horizontal polymerization reactor, the area including the catalyst feed part, and a dew point (Tz) of a mixed gas in the reactor is from 0°C to 3.0°C.

[10] The method for producing the propylene-based polymer according to any one of the above [1] to [9], wherein the catalyst is a Ziegler-based or metallocene-based polymerization catalyst.

[11] The method for producing the propylene-based polymer according to any one of the above [1] to [10], wherein the produced propylene-based polymer has a melt flow rate (MFR), which is measured at a temperature of 230°C and a load of 2.16 kg, of from 0.3 g/10 min to 150 g/10 min.

The present invention can be expressed as follows.

<1> A method for producing a propylene-based polymer,

wherein a propylene-based polymer is polymerized from propylene or propylene and an $\alpha$-olefin other than propylene in the presence of a catalyst with a cylindrical horizontal polymerization reactor comprising an agitating mechanism rotatable around a horizontal axis inside the reactor, by a continuous gas phase polymerization which removes reaction heat by vaporization heat of a liquefied monomer-containing liquid; the catalyst is fed from an upper part of one end of the horizontal polymerization reactor; and the propylene-based polymer is discharged from a lower part of the other end of the horizontal polymerization reactor;
wherein the method comprises the following step group (I) or (II).

[Step group (I)]

The step group (I) comprises the following steps (I-1), (I-2) and (I-3). It may further comprise at least one selected from the group consisting of the following steps (I-4) and (I-5) .
Step (I-1): A temperature measuring step in which a temperature distribution of the cylindrical horizontal polymerization reactor in a circumferential direction, is measured so that a distance between adjacent measurement points is a central angle of $\pi/10$ (rad) or less.
Step (I-2): A calculating step in which a temperature distribution parameter (A) defined by the following formula 1 is calculated from the temperature distribution obtained by the temperature measuring step:

$$A = Th \times \theta w \quad (Formula\ 1)$$

(where Th = Tp - Tave; Ti is a temperature (°C) of an i-th measurement point (where i is an integer of from 1 to n, and n is a number of the measurement points in the circumferential direction); Tp is a highest temperature (°C) among Ti's; Tave is an average temperature (°C) of Ti's; and $\theta w$ is a sum (rad) of central angles of adjacent measurement points which have a difference between Ti and Tave (Ti - Tave) of 0.5°C or more and which include the measurement point with Tp.)
Step (I-3): A monitoring step in which the temperature distribution parameter (A) is monitored so that the parameter is prevented from exceeding a predetermined value.
Step (I-4): A condition controlling step (1) in which a production condition is controlled so that the temperature distribution parameter (A) is prevented from exceeding the predetermined value.
Step (I-5): A condition controlling step (2) in which, when the temperature distribution parameter (A) exceeds the predetermined value, the production condition is controlled so that the temperature distribution parameter (A) is equal to or less than the predetermined value.

[Step group (II)]

The step group (II) comprises the following steps (II-1), (II-2) and (II-3). It may further comprise at least one selected from the group consisting of the following steps (II-4) and (II-5).
Step (II-1): A temperature measuring step in which a part of a temperature distribution of the cylindrical horizontal polymerization reactor in a circumferential direction, is measured so that a distance between adjacent measurement points is a central angle of $\pi/10$ (rad) or less.
Step (II-2): A calculating step in which a temperature distribution parameter (As) defined by the following formula 2 is calculated from the temperature distribution obtained by the temperature measuring step:

$$As = Th_s \times \theta w_s \quad (Formula\ 2)$$

(where $Th_s$ = Tp - Tref; Ti is a temperature (°C) of an i-th measurement point (where i is an integer of from 1 to n, and n is a number of the measurement points in the circumferential direction); Tp is a highest temperature (°C) among Ti's; Tref is a predetermined reference temperature (°C); and $\theta w_s$ is a sum (rad) of central angles of adjacent measurement points which a difference between Ti and Tref (Ti - Tref) is equal to or more than a predetermined temperature and which include the measurement point with Tp.)
Step (II-3): A monitoring step in which the temperature distribution parameter (As) is monitored so that the parameter is prevented from exceeding a predetermined value.
Step (II-4): A condition controlling step (1') in which a production condition is controlled so that the temperature distribution parameter (As) is prevented from exceeding the predetermined value.
Step (II-5): A condition controlling step (2') in which, when the temperature distribution parameter (As) exceeds the predetermined value, the production condition is controlled so that the temperature distribution parameter (As) is equal to or less than the predetermined value.

<2> The method for producing the propylene-based polymer according to the above <1>, wherein, in the temperature measuring step, the temperature distribution is measured at least in the circumferential direction of a catalyst feed part of the horizontal polymerization reactor.

<3> The method for producing the propylene-based polymer according to the above <1> or <2>, wherein, in the temperature measuring step, the temperature distribution is measured on an outer surface of the horizontal polymerization reactor.

<4> The method for producing the propylene-based polymer according to any one of the above <1> to <3>, wherein, in the temperature measuring step, the temperature distribution is measured so that the distance between the adjacent measurement points is in a range of from 10 mm to 1000 mm.

<5> The method for producing the propylene-based polymer according to any one of the above <1> to <4>, wherein, in the temperature measuring step, a temperature profile is created by plotting the temperatures measured at the measurement points in the circumferential direction on a circular coordinate system, using radial coordinate r as temperature and angular coordinate θ as a position of each of the measurement points in the circumferential direction.

<6> The method for producing the propylene-based polymer according to any one of the above <1> to <5>, wherein the predetermined value is set in a range of from $0\pi$ to $30\pi$.

<7> The method for producing the propylene-based polymer according to any one of the above <1> to <6>, wherein a rotational speed of the agitating mechanism is from 5 rpm to 50 rpm.

<8> The method for producing the propylene-based polymer according to any one of the above <1> to <7>, wherein a temperature difference $\Delta T1$ (°C) (= Tx - Tz) between a temperature (Tx) of an area of the horizontal polymerization reactor, the area including the catalyst feed part, and a dew point (Tz) of a mixed gas in the reactor is from 0°C to 3.0°C.

<9> The method for producing the propylene-based polymer according to any one of the above <1> to <8>, wherein the catalyst is a Ziegler-based or metallocene-based polymerization catalyst.

<10> The method for producing the propylene-based polymer according to any one of the above <1> to <9>, wherein the produced propylene-based polymer has a melt flow rate (MFR), which is measured at a temperature of 230°C and a load of 2.16 kg, of from 0.3 g/10 min to 150 g/10 min.

Advantageous Effects of Invention

According to the production method of the present invention, the formation of aggregated polymers can be suppressed in the continuous gas phase polymerization process using the cylindrical horizontal polymerization reactor in which reaction heat is removed by the vaporization heat of the liquefied monomer-containing liquid; excellent long-term operability can be exerted; an improvement in production efficiency can be achieved; and a propylene-based polymer can be stably produced.

Brief Description of Drawings

[FIG. 1] Fig. 1 is a schematic explanatory view showing an example of the configuration of an apparatus used in the production method using the horizontal polymerization reactor of the present invention.
[FIG. 2] FIG. 2 is a schematic explanatory view showing another example of the configuration of the apparatus used in the production method using the horizontal polymerization reactor of the present invention.
[FIG. 3] FIG. 3 is a schematic view showing the temperature measurement points of the horizontal polymerization reactor in the circumferential direction.
[FIG. 4] FIG. 4 is a view showing a temperature profile (T) created by plotting the temperatures measured at the measurement points in the circumferential direction on a circular coordinate system, using radial coordinate r as temperature and angular coordinate θ as the position of each of the measurement points in the circumferential direction.
[FIG. 5] FIG. 5 is a view showing a method for obtaining θw on a temperature profile (T) created by plotting the temperatures measured at the measurement points in the circumferential direction on a circular coordinate system, using radial coordinate r as temperature and angular coordinate θ as the position of each of the measurement points in the circumferential direction.

Description of Embodiments

Hereinafter, the present invention will be described in detail. In the present Description, "to" which shows a numerical range is used to describe a range in which the numerical values described before and after "to" indicate the lower limit value and the upper limit value.

Also in the present Description, the combination of the upper and lower limit values indicating a numerical range may be any combination. In addition, each of the preferred ranges of the properties described in the present Description may be any combination.

The first embodiment of the propylene-based polymer production method of the present invention is a method for producing a propylene-based polymer,

wherein a propylene-based polymer is polymerized from propylene or propylene and an α-olefin other than propylene in the presence of a catalyst with a cylindrical horizontal polymerization reactor comprising an agitating mechanism rotatable around the horizontal axis inside the reactor, by a continuous gas phase polymerization which removes reaction heat by the vaporization heat of a liquefied monomer-containing liquid; the catalyst is fed from the upper part of one end of the horizontal polymerization reactor; and the propylene-based polymer is discharged from the lower part of the other end of the horizontal polymerization reactor;
wherein the method comprises:

a temperature measuring step in which the temperature distribution of the cylindrical horizontal polymerization reactor in the circumferential direction, is measured so that the distance between adjacent measurement points is a central angle of $\pi/10$ (rad) or less,
a calculating step in which the temperature distribution parameter (A) defined by the following formula 1 is calculated from the temperature distribution obtained by the temperature measuring step, and
a monitoring step in which the temperature distribution parameter (A) is monitored so that the parameter is prevented from exceeding a predetermined value; and
wherein the method optionally further comprises at least one selected from the group consisting of:

a condition controlling step (1) in which the production condition is controlled so that the temperature distribution parameter (A) is prevented from exceeding the predetermined value, and
a condition controlling step (2) in which, when the temperature distribution parameter (A) exceeds the predetermined value, the production condition is controlled so that the temperature distribution parameter (A) is equal to or less than the predetermined value:

$$A = Th \times \theta w \quad (Formula \ 1)$$

(where Th = Tp - Tave; Ti is the temperature (°C) of the i-th measurement point (where i is an integer of from 1 to n, and n is the number of the measurement points in the circumferential direction); Tp is the highest temperature (°C) among Ti's; Tave is the average temperature (°C) of Ti's; and θw is the sum (rad) of the central angles of adjacent measurement points which have a difference between Ti and Tave (Ti - Tave) of 0.5°C or more and which include the measurement point with Tp.)

The second embodiment of the propylene-based polymer production method of the present invention is a method for producing a propylene-based polymer,

wherein a propylene-based polymer is polymerized from propylene or propylene and an α-olefin other than propylene in the presence of a catalyst with a cylindrical horizontal polymerization reactor comprising an agitating mechanism rotatable around the horizontal axis inside the reactor, by a continuous gas phase polymerization which removes reaction heat by the vaporization heat of a liquefied monomer-containing liquid; the catalyst is fed from the upper part of one end of the horizontal polymerization reactor; and the propylene-based polymer is discharged from the lower part of the other end of the horizontal polymerization reactor;
wherein the method comprises:

a temperature measuring step in which a part of the temperature distribution of the cylindrical horizontal polymerization reactor in the circumferential direction, is measured so that the distance between adjacent measurement points is a central angle of $\pi/10$ (rad) or less,
a calculating step in which the temperature distribution parameter (As) defined by the following formula 2 is calculated from the temperature distribution obtained by the temperature measuring step, and

a monitoring step in which the temperature distribution parameter (As) is monitored so that the parameter is prevented from exceeding a predetermined value; and
wherein the method optionally further comprises at least one selected from the group consisting of:

a condition controlling step (1') in which the production condition is controlled so that the temperature distribution parameter (As) is prevented from exceeding the predetermined value, and
a condition controlling step (2') in which, when the temperature distribution parameter (As) exceeds the predetermined value, the production condition is controlled so that the temperature distribution parameter (As) is equal to or less than the predetermined value:

$$As = Th_s \times \theta w_s \quad (Formula\ 2)$$

(where $Th_s$ = Tp - Tref; Ti is the temperature (°C) of the i-th measurement point (where i is an integer of from 1 to n, and n is the number of the measurement points in the circumferential direction); Tp is the highest temperature (°C) among Ti's; Tref is a predetermined reference temperature (°C); and $\theta w_s$ is the sum (rad) of the central angles of adjacent measurement points which the difference between Ti and Tref (Ti - Tref) is equal to or more than a predetermined temperature and which include the measurement point with Tp.)

Hereinafter, the present invention will be described in detail. First, the propylene-based polymer production method using the cylindrical horizontal polymerization reactor comprising the agitating mechanism rotatable around the horizontal axis inside the reactor, by the continuous gas phase polymerization which removes the reaction heat by the vaporization heat of the liquefied monomer-containing liquid, will be described, which is common to the first and second embodiments. Next, the production control method including the monitoring step based on the specific temperature distribution parameter characteristic of the present invention, will be described.

1. Monomer used for the production of the propylene-based polymer of the present invention.

The "$\alpha$-olefin" to be polymerized with propylene in the present invention, is not particularly limited. An olefin having 2 to 12 carbon atoms, which is other than propylene, is preferably used, and an $\alpha$-olefin having 2 to 12 carbon atoms is particularly preferably used.
As the $\alpha$-olefin other than propylene, examples include, but are not limited to, ethylene, 1-butene, 1-pentene, 1-hexene, 1-octene, 1-decene, 4-methyl-1-pentene and 3-methyl-1-pentene. Of them, ethylene, 1-butene or 4-methyl-1-pentene is more preferably used. These $\alpha$-olefins may be used alone or in combination of two or more. The $\alpha$-olefin to be polymerized in the present invention, which is other than propylene, is also described as "different $\alpha$-olefin" in the present Description.

2. Catalyst

As the olefin polymerization catalyst which is used in the present invention, examples include (I) a polymerization catalyst composed of (1) a solid catalyst component containing, as essential components, titanium, magnesium, halogen and an electron-donating compound serving as an internal donor, (2) an organoaluminum compound and, as needed, (3) an electron donating compound as an external donor, that is, a Ziegler-based polymerization catalyst.
It is also possible to use (II) a polymerization catalyst composed of (1) a metallocene complex comprising a transition metal compound, (2) a catalyst component containing, as an essential component, a co-catalyst that can activate the complex, and (3) an organoaluminum compound as needed, that is, a metallocene polymerization catalyst. The phrase "... containing, as an essential component, ..." indicates the following: elements other than the component may be contained; these elements may be individually present as any desired compounds; and these elements may be present as one where they are mutually bound.
As the olefin polymerization catalyst used in the present invention, a conventionally-known olefin polymerization catalyst may be used. For example, it may be appropriately selected and used from the olefin polymerization catalysts described in the following: JP-A Nos. 2011-148980, 2012-92275, 2011-153287 and 2017-95606.
The olefin polymerization catalyst usable in the present invention is preferably the aforementioned Ziegler-based catalyst or metallocene-based catalyst. However, it is not limited to them.

3. Polymerization mode and polymerization reactor

In the present invention, the production of the propylene-based polymer obtained by polymerizing propylene or propylene and the different $\alpha$-olefin, is carried out with the cylindrical horizontal polymerization reactor comprising the agitating mechanism rotatable around the horizontal axis inside the reactor, by the continuous gas phase polymerization which removes the reaction heat by the vaporization heat of the liquefied monomer-containing liquid.

In the present invention, the gas phase polymerization process does not mean that any liquid is not present at all. It is sufficient that a phase for polymerization is substantially a gas phase, and a liquid may be present unless it deviates from the gist of the present invention. As the liquid, examples include, but are not limited to, liquefied propylene for heat removal and an inert hydrocarbon component such as hexane.

The polymerization reactor used in the present invention (hereinafter, it may be simply referred to as "reactor") depends on the raw material to be used, the reaction conditions, the reaction mode, the product, etc., and it can be selected from any existing reactors and used without limitations in size, material, etc., as long as it is suitable for the reaction. The shape is a cylindrical horizontal polymerization reactor having a cylindrical part. Since heat removal is carried out using the vaporization heat (evaporation latent heat) of the liquefied propylene, the reactor is preferably equipped with a recycling apparatus which discharges a gas containing propylene from the reactor, cools the discharged gas to liquefy at least a part thereof, and feeds at least a part of the liquefied component to the reactor. To minimize the influence of heat dissipation or outside temperature, the reactor is preferably kept warm. For example, the reactor can be kept warm by steam tracing or by covering the reactor with an insulating material. The insulating material for the reactor can be selected from known insulating materials. As the material, examples include, but are not limited to, glass wool.

The size of the reactor can be appropriately selected depending on individual reaction modes and the like. The volume is usually 0.1 $m^3$ or more and 150 $m^3$ or less. From the viewpoint of industrial productivity and economic efficiency, the volume is preferably 20 $m^3$ or more. From the viewpoint of industrial productivity and economic efficiency, the length-to-diameter ratio is preferably 2.0 or more, and it may be 5.0 or less.

In the polymerization method of the present invention, the catalyst is fed from the upper part of one end of the horizontal polymerization reactor, and the propylene-based polymer is discharged from the lower part of the other end of the horizontal polymerization reactor.

Polymer particles polymerized in a horizontal polymerization reactor are formed in an agitating reactor, and they move along the reactor while being transferred by agitation with the progress of polymerization. Accordingly, the polymerization reactor used in the present invention is a plug flow type which is a characteristic not found in other polymerization reactors and which is a flow pattern that several continuous stirred tanks are arranged in series. The horizontal polymerization reactor is economically advantageous in that it can easily achieve a solid mixing degree which is equal to the degree of two, three or more reactors in terms of the ratio of length to diameter. In addition, since the polymerization reactor is horizontal, the horizontal polymerization reactor is advantageous in that compared to a vertical reactor, polymerization heat can be efficiently removed during heat removal.

Meanwhile, in the case where polymerization is carried out by a gas phase process using a horizontal polymerization reactor comprising an agitator rotatable around a horizontal axis in the inside of the reactor, the amount of the aggregated polymer increases by an abnormal reaction by the influence of local heat generation and the like in the reactor; therefore, the amount of fine powder tends to increase due to physical contact of the aggregated polymer with the agitator.

The method for producing the propylene-based polymer of the present invention has the following characteristics: the formation of aggregated polymers and, as a result, the formation of fine powder can be suppressed by, as will be described below, appropriately monitoring the temperature parameter and controlling the production condition, and the stability and productivity of operation, etc., can be improved, accordingly.

With regard to the arrangement of the reactor, any method can be used unless the gist of the invention is inhibited. The number of the reactor may be one or more. In the case of using where two or more reactors, they may be connected in series, or they may be connected in parallel.

A preferable example is a reaction apparatus in which two to four reactors are connected in series. Particularly in the case of producing a block copolymer of propylene and the different $\alpha$-olefin, preferred is an arrangement including at least two reactors connected in series. A method for arranging two or more reactors is not particularly limited. In the case of using a plurality of the horizontal polymerization reactors comprising the agitator rotatable around the horizontal axis, the rotation axis of the agitator of an upstream reactor is preferably arranged at the same or higher level as compared with the rotation axis of the agitator of a downstream reactor, and it is more preferably arranged at a certain level which is higher than the rotation axis of the agitator of a downstream reactor.

The rotational speed of the agitating mechanism is preferably from 5 rpm to 50 rpm, and more preferably from 10 rpm to 30 rpm, from the viewpoint of the dispersibility of the catalyst and the contact efficiency between the powder and the liquefied monomer-containing liquid.

The residence time distribution of the powder can be narrowed without increasing the number of the reactors, by a method of providing a weir for limiting the transfer of the powder in the inside of the reactor. The weir may be in the form of a fixed weir which is fixed to the reactor, or it may be in the form of a rotation weir which is fixed to the rotation axis. The residence time can be changed as desired depending on the production amount.

As a heat removal method using the vaporization heat of the liquefied monomer-containing liquid, any method can be used.

For heat removal using the vaporization heat of the liquefied monomer-containing liquid, it is sufficient to feed the liquefied monomer-containing liquid which contains liquefied monomers (including liquefied propylene) and other components and which is in a substantially liquid state, to the reactor. While a fresh liquefied monomer can be fed to the reactor, it is generally desirable to use a recycled monomer. A common procedure for using the recycled monomer is exemplified below.

An unreacted gas containing propylene is discharged from the reactor; the discharged unreacted gas is cooled to liquefy at least a part thereof; and at least a part of the liquefied component is fed to the reactor. At this time, the component to be liquefied should contain propylene. However, it may contain a comonomer component as typified by ethylene and an inert hydrocarbon component such as iso-butane and hexane.

In the present invention, the removal of reaction heat using the vaporization heat of the liquefied monomer-containing liquid does not mean that the heat removal is performed by using only the vaporization heat of the liquefied monomer-containing liquid. Another heat removal method can be used in combination, unless it deviates from the gist of the present invention. As the method, examples include, but are not limited to, a heat removal method using a jacket equipped with the reactor, and a method of discharging a part of the gas from the reactor, cooling the discharged gas by a heat exchanger, and returning the cooled gas to the reactor again. However, in the present invention, the heat removal needs to be mainly achieved by using the vaporization heat of the liquefied monomer-containing liquid. More specifically, it may be such heat removal, that in at least one reactor, at least a half of heat to be removed is removed using the vaporization heat of the liquefied monomer-containing liquid.

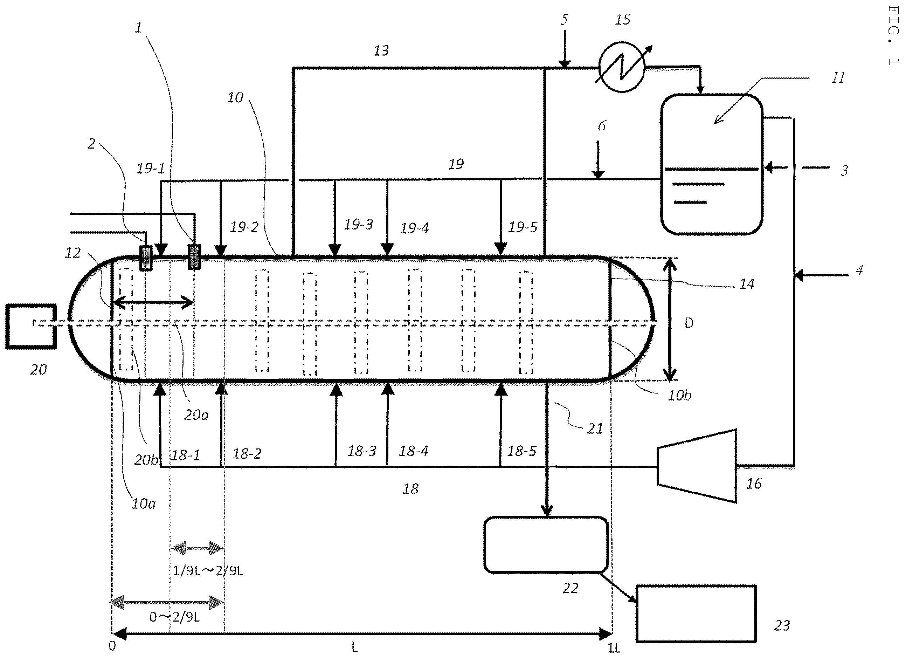

FIG. 1 is a schematic explanatory view showing an example of the configuration of an apparatus used in the production method using the horizontal polymerization reactor of the present invention. A horizontal polymerization reactor 10 is an elongated one and includes partition walls 10a and 10b. As shown in FIG. 1, the reactor is generally placed in a horizontal position. The polymerization reaction is carried out in a space formed between the partition walls 10a and 10b in the horizontal polymerization reactor 10. In FIG. 1, the partition wall 10a, which is an upstream partition wall, is the upstream end 12 of the reactor, and the partition wall 10b, which is a downstream partition wall, is the downstream end 14 of the reactor. Although not shown in the figure, in the case where the partition walls are in a curved form, the top of the curved upstream partition wall and that of the curved downstream partition wall are the upstream end and downstream end of the reactor, respectively.

A horizontal axis 20a of an agitator 20 extends into the downstream reactor end 14 of the horizontal polymerization reactor 10, and a plurality of agitating blades 20b for agitation are fitted in the horizontal polymerization reactor 10. In the horizontal polymerization reactor 10, the agitating blades 20b mix the polymer particles with other substances introduced in the reactor.

The catalyst components are fed from catalyst component feed lines 1 and 2 of the horizontal polymerization reactor 10, and the fed catalyst components start polymerization while being mixed with the polymer particles by the agitating blades 20b. The catalyst component feed lines 1 and 2 can be placed at any positions insofar as the catalyst is fed from the upper part of one end of the horizontal polymerization reactor so that, in the positional relationship between a thermometer and a quench nozzle, the temperature of an area section including the catalyst feed part can be measured and the catalyst fed into the reactor can be mixed with the liquefied monomer-containing liquid. This is because once the catalyst components are added to the upstream part of the reactor, they can move to the downstream part of the reactor while growing into polymer particles by polymerization.

The polymerization catalyst of the present invention and other optional components can be fed to the horizontal polymerization reactor using known methods. The polymerization catalyst may be fed to the reactor as it is in a powder form, or it may be fed after dilution with an inert solvent such as liquid saturated hydrocarbon or mineral oil.

Also, another component constituting the polymerization catalyst, such as an organoaluminum compound, may be fed as a component contained in the catalyst after it is brought into contact with the Ziegler-based solid catalyst component or the metallocene complex component, or it may be fed separately from these components.

The catalyst component feed line 1 may be a line for feeding the main component of the catalyst, such as the solid catalyst component including the Ziegler-based solid catalyst component or the metallocene complex, and another polymerization catalyst component. When the distance between the partition walls 10a and 10b is expressed as L and, in the direction from the partition wall 10a to the partition wall 10b, the position of the partition wall 10a and that of the partition wall 10b are expressed as 0 (L) and 1 L, respectively, the catalyst component feed line 1 is preferably placed in a range of 1/9 L or more and 2/9 L or less from the partition wall 10a. When the catalyst component feed line 1 is at a position of 1/9 L or more from the partition wall 10a, the catalyst is less likely to attach to the inner wall of the reactor; the formation of an aggregate or aggregated polymer can be suppressed; and enhanced operation stability can be obtained. When the catalyst component feed line 1 is at a position of 2/9 L or less from the partition wall 10a, the residence time of the catalyst in the reactor is not too short, and a decrease in activity can be suppressed, so that this case is economically advantageous.

Accordingly, in the present invention, the catalyst feed part for feeding the catalyst from the upper part of one end of the horizontal polymerization reactor may be placed in a range of 1/9 L or more and 2/9 L or less from the partition wall 10a, when the distance between the partition walls 10a and 10b is expressed as L and, in the direction from the partition wall 10a to the partition wall 10b, the position of the partition wall 10a and that of the partition wall 10b are expressed as 0 (L) and 1 L, respectively.

A catalyst component feed line 2 may be a line for feeding a co-catalyst, the organoaluminum compound and another polymerization catalyst component. The catalyst component feed line 2 may be placed in a range of 0 (L) or more and 2/9 L or less from the partition wall 10a, when the distance between the partition walls 10a and 10b is expressed as L. The catalyst component feed line 2 is preferably placed at the same distance from the partition wall 10a as the catalyst component feed line 1 or on the upstream side thereof.

As needed, each of the catalyst component feed lines 1 and 2 may be one single line, or a plurality of lines in the above range may be used as each of the catalyst component feed lines 1 and 2. The catalyst component feed line 1 may also serve as the catalyst component feed line 2.

The polymerization heat generated during polymerization is removed by the vaporization heat of the liquefied monomer-containing liquid which contains raw material liquefied propylene fed from a liquefied monomer-containing liquid feed line 19.

The liquefied monomer-containing liquid introduced into the horizontal polymerization reactor 10 from the liquefied monomer-containing liquid feed line 19, is polymerized while being mixed with the catalyst component and the polymer particles by the agitating blades 20b.

As the method of feeding the liquefied monomer-containing liquid used for heat removal, any method can be used so long as it is a method of feeding the liquefied monomer-containing liquid in a substantially liquid state to the reactor. Since the catalyst feed part is present at the upper part of the reactor, the liquefied monomer-containing liquid is preferably fed from the upper part of the reactor to a gas phase part in the inside of the reactor. The liquefied monomer is dispersed well when the catalyst feed part and the liquefied monomer feed line are both present at the upper part of the reactor. In addition, since the powder is not brought into direct contact with the line, polymer adhesion to the catalyst feed part and the liquefied monomer feed line can be suppressed.

Especially in the area section including the catalyst feed part, from the viewpoint of suppressing the formation of aggregated polymers, the liquefied monomer-containing liquid is preferably fed at least at one spot, and position of the spot is preferably in a range of 0 (L) or more and 2/9 L or less from the partition wall 10a when the distance between the partition walls 10a and 10b is L.

Also, in the area section including the catalyst feed part, the spot for feeding the liquefied monomer-containing liquid is particularly preferably placed at the same distance from the partition wall 10a as the catalyst component feed line 1 or on the upstream side thereof.

Also, in the area section including the catalyst feed part, the liquefied monomer-containing liquid may be fed at several spots.

An unreacted gas is discharged into the outside of the reaction system from an unreacted gas discharge line 13, and a part thereof is condensed at a condenser 15 and is separated into a liquid phase and a gas phase in a recycle drum 11. The liquid phase part is re-introduced into the liquefied monomer-containing liquid feed line 19 for polymerization heat removal. The gas phase part is mixed with hydrogen for molecular weight control, the different $\alpha$-olefin and so on, which are fed from a line 4, is pressurized by a compressor 16 and is again fed through a raw material mixed gas feed line 18 which is placed at the bottom part of the horizontal polymerization reactor 10.

At this time, the flow rate of the liquefied monomer-containing liquid from liquefied monomer-containing liquid feed lines 19-1, 19-2, 19-3, 19-4 and 19-5, which are placed at specific intervals at the upper part, and the flow rate of the temperature-controlled mixed gas from raw material mixed gas feed lines 18-1, 18-2, 18-3, 18-4 and 18-5, which are placed at specific intervals at the lower part, may be individually controlled. These flow rates are controlled by operating valves placed at the liquefied monomer-containing liquid feed line and the raw material mixed gas feed line.

The polymer particles are transferred from the upstream part to the downstream part in the polymerization tank with undergoing reaction and mixing, and then they are discharged into the outside of the reaction system through a polymer discharge line 21. From the discharged powder, each gas is separated by a gas recovering apparatus 22, and the polymer particles are recovered by a powder recovering apparatus 23.

For the horizontal polymerization reactor of the present invention, it is possible to set a plurality of area sections different in temperature in the horizontal axis direction in the inside thereof. When a plurality area sections different in temperature in the horizontal axis direction are set in the inside of the reactor, among the area sections, the area section including the catalyst feed part is one including the catalyst component feed line. When there are a plurality of catalyst component feed lines, the area section including the catalyst feed part is an area section including a catalyst component feed line for feeding the main component of the catalyst, that is, an area section including the catalyst component feed line 1 as shown in FIG. 1. The polymerization temperature of each area section is obtained by measuring the temperature of the polymer particles agitated by the agitator using the thermometer placed inside the reactor in each area section. That is, the polymerization temperature of each area section is the temperature of the polymer particles in that area section. The temperature of the polymer particles agitated by the agitator rotating around the horizontal axis, is considered to indicate the average value in the area sections around the horizontal axis.

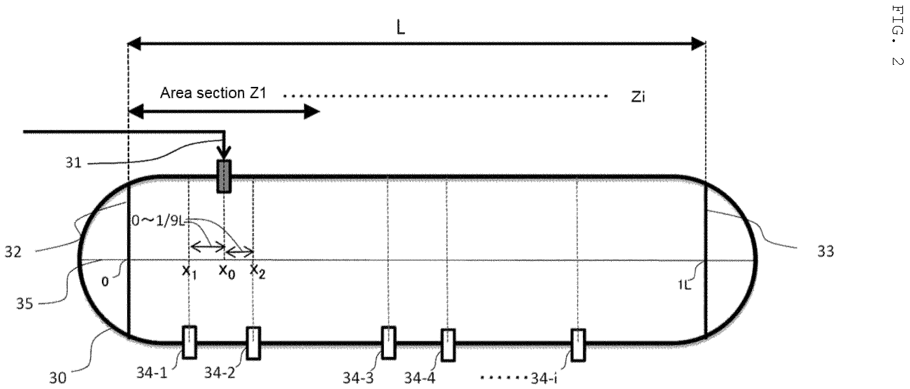

Next, the method for measuring the temperature (Tx) of the polymer particles in the area section including the catalyst feed part of the horizontal polymerization reactor, will be described in detail with reference to FIG. 2. As shown in FIG. 2, the temperature (Tx) of the polymer particles in the area section (Z1) including the catalyst feed part is detected by thermometers 34-1 and 34-2 placed in the area section (Z1) including the catalyst feed part. The thermometers may also serve as those for measuring the temperature distribution described below, or they may be thermometers placed separately from those for measuring the temperature distribution. It is sufficient that the thermometers 34-1 and 34-2 placed in the area section (Z1) including the catalyst feed part, are appropriately placed in the vicinity of a catalyst component feed line 31 so that the temperature of the polymer particles in the vicinity of the catalyst component feed line 31 for feeding the main component of the catalyst can be measured. When $x_0$, $x_1$, $x_2$ and L are the intersection of a perpendicular from the catalyst component feed line 31 to the horizontal axis 35 with the horizontal axis 35, the intersection of a perpendicular from the thermometer 34-1 to the horizontal axis 35 with the horizontal axis 35, the intersection of a perpendicular from the thermometer 34-2 to the horizontal axis 35 with the horizontal axis 35, and the distance between an upstream partition wall 32 and a downstream partition wall 33, respectively, each of the distance between the intersections $x_0$ and $x_1$ and the distance between the intersections $x_0$ and $x_2$ is preferably in a range of from 0 to 1/9 L, more preferably in a range of from 0 to 1/12 L, and still more preferably in a range of from 0 to 1/15 L. Once the thermometers are set in the above range, the polymerization temperature of the catalyst feed part is represented by the agitated polymer. Accordingly, the number of the thermometers for measuring the temperature (Tx) of the polymer particles in the area section including the catalyst feed part, may be one. For the thermometers placed in the area section including the catalyst feed part, as with the thermometers 34-1 and 34-2 shown in FIG. 2, at least one is preferably placed on both the upstream and downstream sides of the catalyst component feed line 31. When the temperatures of the thermometers 34-1 and 34-2 placed on the upstream and downstream sides of the catalyst component feed line 31 are equal, at least the area section sandwiched between the thermometers 34-1 and 34-2 is considered to be the area section including the catalyst feed part, and the temperatures of the thermometers 34-1 and 34-2 are considered to indicate the temperature (Tx) of the polymer particles in the area section including the catalyst feed part.

In the case of using two or more thermometers for measuring the temperature (Tx) of the polymer particles in the area section including the catalyst feed part, when the distance between the partition walls 32 and 33 is expressed as L and the positions of the partition walls 32 and 33 on the horizontal axis 35 in the direction from the partition wall 32 to the partition wall 33 are expressed as 0 (L) and 1 L, respectively, at least one thermometer 34-1 is preferably placed between the position of 0 (L) and the position of $x_0$, and it is more preferably placed between the position of 1/9 L and the position of $x_0$. Also, at least one thermometer 34-2 is preferably placed between the position of $x_0$ and the position of 1/3 L, and it is more preferably placed between the position of $x_0$ and the position of 2/9 L.

When the thermometers 34-1 and 34-2 are placed in the above ranges, the polymerization temperature of the catalyst feed part is more precisely represented by the agitated polymer.

When a plurality of area sections different in temperature in the horizontal axis direction are not set in the inside of the reactor and the temperature inside the reactor is constant, the thermometers 34-1 and 34-2 may be set at any positions.

In a steady state operation, a polymer bed is formed in the whole horizontal polymerization reactor, and the polymerization reaction is carried out in all the areas.

Polymerization conditions such as pressure, residence time and temperature can be set as desired, unless they deviate from the gist of the invention.

More specifically, the polymerization pressure is preferably 1,200 kPaG or more, more preferably 1,400 kPaG or more, and particularly preferably 1,600 kPaG or more. On the other hand, it is preferably 4,200 kPaG or less, more preferably 3,500 kPaG or less, and particularly preferably 3,000 kPaG or less. Since the gas phase is generally circulated in the horizontal polymerization reactor, the polymerization pressure in the same reactor is kept constant. Moreover, physical division is possible by a weir-shaped article placed in the reactor.

The residence time can be controlled as desired, according to the configuration of the reactor and the target polymer. In general, the residence time is set in a range of from 30 minutes to 5 hours.

The polymerization temperature is preferably 0°C or more, more preferably 30°C or more, and particularly preferably 40°C or more. On the other hand, it is preferably 100°C or less, more preferably 90°C or less, and particularly preferably 80°C or less.

In the present invention, from the viewpoint of suppressing the formation of aggregated polymers, achieving an improvement in production efficiency and stably producing the propylene-based polymer, especially, the temperature (Tx) of the area section including the catalyst feed part is preferably set to 50°C or more and 65°C or less, and it is more preferably set to 55°C or more and 65°C or less.

In the inside of the horizontal polymerization reactor used in the present invention, a plurality of area sections different in temperature in the horizontal axis direction can be set. In the present invention, the area section does not represent a physical area section using a weir. It represents an area section in which temperature control is performed.

An example of the temperature control performed in the horizontal polymerization reactor will be described in detail with reference to FIG. 2. A horizontal polymerization reactor 30 is an exemplary horizontal polymerization reactor comprising partition walls 32 and 33 and dividing the area into i sections of Z1 to Zi. The partition wall 32, which is an upstream partition wall, is the upstream end of the reactor, and the partition wall 33, which is a downstream partition wall, is the downstream end of the reactor. In FIG. 2, the section Z1 is an area section including the upstream end, and the section Zi is an area section including the downstream end. In FIG. 2, the catalyst component is fed from a catalyst component feed line 31 of the reactor. An area section including the catalyst feed part is the section Z1. In FIG. 2, the agitator is omitted.

The reaction heat generated during the polymerization is removed by the vaporization heat of the liquefied monomer-containing liquid fed from the liquefied monomer-containing liquid feed line. The polymerization temperatures of the area sections are detected by thermometers 34-1, 34-2, 34-3, 34-4 ... 34-i and so on placed in the area sections.

In the present invention, with regard to the polymerization temperature in the inside of the reactor, the reactor temperatures $T_i$'s of a plurality of the area sections ($Z_i$) can be individually controlled at different temperatures by the thermometers placed in the inside of the reactor.

The polymerization temperatures of the area sections may be individually controlled by the combination of the flow rate of the liquefied monomer-containing liquid from the liquefied monomer-containing liquid feed lines placed at specific intervals at the upper part and the flow rate of the temperature-controlled mixed gas from raw material mixed gas feed lines placed at specific intervals at the lower part.

It is general to use the same reaction conditions in a single polymerization reactor. In the present invention, however, the reactor is preferably divided into i (i is a desired integer of 2 or more) area sections from the upstream to the downstream direction so that a reaction temperature $T_n$, which is the reaction temperature of the n-th (n is an integer of 1 or more and (i-1) or less) area section (n) from the upstream end to the downstream end of the horizontal polymerization reactor of the present invention, and a reaction temperature $T_n + 1$, which is the reaction temperature of an area section (n + 1) adjacent thereto on the downstream side, satisfy $T_n \leq T_n + 1$. Accordingly, the polymerization temperature can be controlled according to the polymerization properties of the catalyst, and it is effective for suppression of the aggregated polymer formed by insufficient heat removal owing to local heat generation and the like.

In this case, the thermometers can be placed as desired, according to the reactor volume and the reaction mode. However, they are preferred to control at least the upstream part, middle part and downstream part of the inside of the reactor (corresponding to i = 3). When the distance between the partition walls 32 and 33 is expressed as L and the positions of the partition walls 32 and 33 on the horizontal axis 35 in the direction from the partition wall 32 to the partition wall 33 are expressed as 0 (L) and 1 L, respectively, at least one thermometer is preferably placed at each of the positions between 0 (L) and 1/3 L, between 1/3 L and 2/3 L and between 2/3 L and 3/3 L, that is, three or more thermometers are preferably placed. That is, the number i of the area sections is preferably 3 or more. The thermometers for measuring the temperatures of the polymer particles in the area sections may also serve as thermometers for measuring the below-described temperature distribution in the circumferential direction of the reactor, or they may be thermometers placed separately from the thermometers for measuring the temperature distribution.

In the present invention, the temperature difference $\Delta T2$ (°C) (= $T\omega$ - $T\alpha$) between the temperature ($T\alpha$) of the area section including the upstream end and the temperature ($T\omega$) of the area section including the downstream end in the reactor, is preferably 0.1°C or more and 20°C or less, from the viewpoint of obtaining the effect of improving productivity associated with an increase in temperature at the downstream part of the reactor. When $\Delta T2$ exceeds 20°C, a large temperature change occurs in the single reactor, and there is a possibility that a change in the polymer composition may be induced.

In the present invention, the temperature ($T\alpha$) of the area section including the upstream end in the reactor and the temperature ($T\omega$) of the area section including the downstream end therein, are the temperature of the most upstream area section of the reactor and the temperature of the most downstream area section thereof, respectively. They are the temperatures of the polymer particles in the area sections.

Each thermometer is preferably placed at a position in a range of from 1/9 L to 2/9 L from the upstream end of each area section of the horizontal axis 35.

Also in the present invention, the temperature difference $\Delta T1$ (°C) (= Tx - Tz) between the temperature (Tx) of the area including the catalyst feed part and the dew point (Tz) of the mixed gas in the reactor is preferably in a range of from 0°C to 5.0°C, and more preferably in a range of from 0°C to 3.0°C.

The lower limit value of $\Delta T1$ is more preferably 0.5°C or more, still more preferably 1.0°C or more, and even more preferably 1.5°C or more. The upper limit value is more preferably 4.0°C or less, and still more preferably 3.0°C or less. When the temperature difference $\Delta T1$ falls below the lower limit value, since the polymerization temperature and the dew point of the mixed gas in the reactor are too near, there is a possibility that the polymerization gas is condensed in the reactor, failing to retain the target reaction pressure. When the temperature difference $\Delta T1$ exceeds the upper limit value, after the vaporization of the liquefied monomer-containing liquid, the amount of removed heat is increased by sensible heat, and the removed heat amount per unit volume of the liquefied monomer-containing liquid is increased. Accordingly, the amount of the liquefied monomer-containing liquid is decreased, and the formation of the aggregated polymer may occur, which results from the melting of the formed polymer and the like owing to local heat generation induced by insufficient heat removal. Moreover, especially when the temperature difference ΔT exceeds the upper limit value by increasing the polymerization temperature too high, the amount of entrainment may increase since, in addition to the above reason, the powder morphology is deteriorated by a rapid reaction and the powder is likely to be pulverized by agitation and gas fluidization, especially since the formation of fine powder is increased by the pulverization of the powder during agitation.

The dew point (Tz) of the mixed gas in the reactor can be calculated according to the method described in Kagaku Kogaku Binran (Chemical Engineering Handbook) revised 5th version (published by Maruzen Co., Ltd.; p. 485), using the values of the analysis results of the mixed gas by a gas chromatography.

In the present invention, the entrainment amount means the amount of particles passing through an unreacted gas discharge line placed on the upper tank wall (may be also the side part or the bottom part) of the reactor and being transferred to the outside of the reactor together with gas, with respect to the amount of the produced propylene-based polymer. For example, the entrainment amount (g/kg) can be specifically measured by a method of weighing the amount of fine powder removed by a fine particle removal facility (such as a cyclone or a bag filter) placed before a condenser and dividing the amount by the production amount.

At the production of the propylene-based polymer, the entrainment amount is preferably 0.10 g/kg or less.

When this value is high, there is a possibility that load and adhesion to the gas discharge line system are increased by the increase in entrainment, or the gas-condensing ability is lowered by the influx of fine powder into the condenser.

4. Method for monitoring the temperature distribution parameter

4-1. First embodiment [Step group (I)]

In the first embodiment of the propylene-based polymer production method of the present invention, the method comprises:

the temperature measuring step in which the temperature distribution of the cylindrical horizontal polymerization reactor in the circumferential direction is measured so that the distance between the adjacent measurement points is a central angle of $\pi/10$ (rad) or less,
the calculating step in which the temperature distribution parameter (A) defined by the following formula 1 is calculated from the temperature distribution obtained by the temperature measuring step, and
the monitoring step in which the temperature distribution parameter (A) is monitored so that the parameter is prevented from exceeding a predetermined value:

$$A = Th \times \theta w \quad (Formula\ 1)$$

(where Th = Tp - Tave; Ti is the temperature (°C) of the i-th measurement point (where i is an integer of from 1 to n, and n is the number of the measurement points in the circumferential direction); Tp is the highest temperature (°C) among Ti's; Tave is the average temperature (°C) of Ti's; and θw is the sum (rad) of the central angles of the adjacent measurement points which have a difference between Ti and Tave (Ti - Tave) of 0.5°C or more and which include the measurement point with Tp.)

The method optionally further comprises at least one selected from the group consisting of:

the condition controlling step (1) in which the production condition is controlled so that the temperature distribution parameter (A) is prevented from exceeding the predetermined value, and
the condition controlling step (2) in which, when the temperature distribution parameter (A) exceeds the predetermined value, the production condition is controlled so that the temperature distribution parameter (A) is equal to or less than the predetermined value.

4-1-1. Temperature measuring step (Step (I-1))

In the temperature measuring step, the temperature distribution of the cylindrical horizontal polymerization reactor in the circumferential direction, is measured so that the distance between the adjacent measurement points is a central angle of $\pi/10$ (rad) or less.

As described above, the temperature distribution of the horizontal polymerization reactor in the circumferential direction can be measured by placing, in the circumferential direction, a plurality of the thermometers for measuring the temperature (Tx) of the polymer particles in the reactor. Preferably, the temperature distribution is measured on the outer surface of the horizontal polymerization reactor, from the point of view that the cost of placement can be reduced compared to the case of attaching new thermometers to the inside of the existing reactor.

As the means of measuring the temperature distribution, for example, a temperature measuring means such as a contact type temperature sensor (e.g., a thermocouple thermometer, a fiber optic thermometer) and a non-contact type temperature sensor (e.g., a thermal camera) can be used. Since the temperature distribution can be monitored with high accuracy, the contact type sensor is preferred. Since the temperature distribution can be broadly monitored with high accuracy, the fiber optic thermometer is more preferably used to measure the temperature distribution in contact with the outer surface of the reactor.

As the structure of the fiber optic thermometer, examples include, but are not limited to, a structure including a light emitter and a mechanism for converting light into temperature. The temperature detecting parts of the fiber optic thermometer are preferably disposed so as to be in contact with the outer surface of the reactor.

The temperature distribution measuring means needs to be placed so that the temperature detecting parts are aligned at specific intervals on the reactor circumference subject to the temperature measurement. In the case of using the fiber optic thermometer as the temperature distribution measuring means, the fiber optic thermometer needs to be placed so that the temperature detecting parts are aligned at specific intervals on the reactor circumference subject to the temperature measurement. For example, when the intervals between the temperature detecting parts of the fiber optic thermometer are larger than the temperature distribution measurement intervals in the circumferential direction of the reactor, for example, the fiber optic thermometer can be placed in a meandering pattern so that the temperature detecting parts are aligned at specific measurement intervals on the circumference of the reactor.

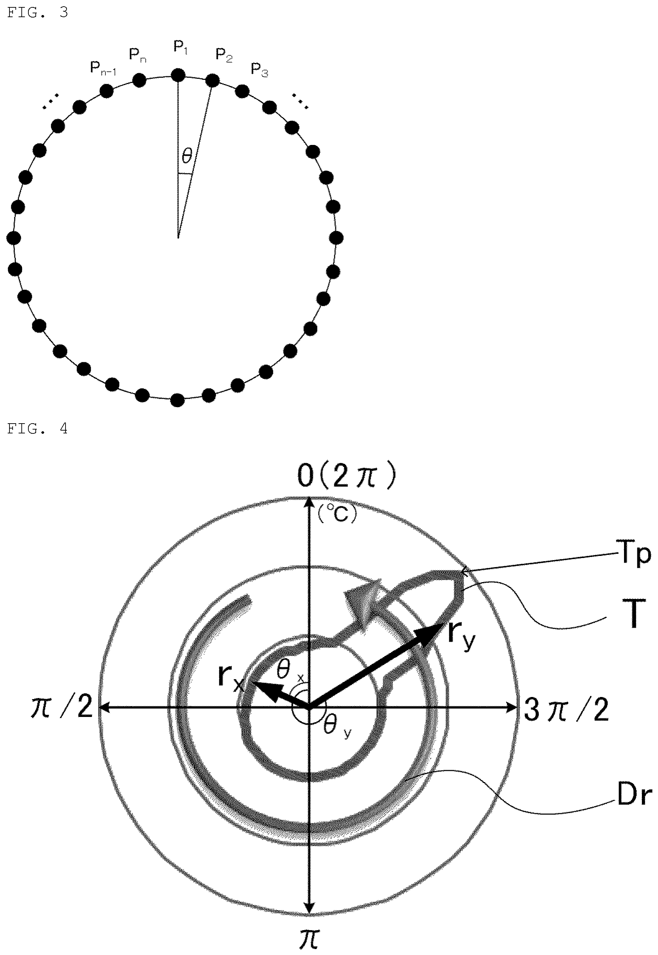

FIG. 3 is a schematic view showing the temperature measurement points of the horizontal polymerization reactor in the circumferential direction. FIG. 3 corresponds to a cross section of the horizontal polymerization reactor 10 shown in FIG. 1, which is formed when the reactor 10 is cut perpendicular to the horizontal axis 20a of the agitator 20 at the position where the temperature distribution in the circumferential direction needs to be measured.

As shown in FIG. 3, each of the temperature distribution measurement intervals of the horizontal polymerization reactor in the circumferential direction can be represented by the central angle $\theta$ which corresponds to the length of an arc between the measurement points (for example, $P_1$ and $P_2$). To precisely detect the correlation between the specific temperature parameter described below and the formation of aggregated polymers, the temperature distribution is measured so that the distance between the adjacent measurement points is a central angle of $\pi/10$ (rad) or less. The distance between the adjacent measurement points may be a central angle of $\pi/18$ (rad) or less; it may be a central angle of $\pi/24$ (rad) or less; or it may be a central angle of $\pi/32$ (rad) or less. The lower limit value of the distance between the adjacent measurement points is not particularly limited, and it may be a central angle of $\pi/150$ (rad) or more.

To precisely detect the correlation between the specific temperature parameter described below and the formation of aggregated polymers, the distance between the temperature detecting parts as the temperature distribution measurement intervals in the circumferential direction of the horizontal polymerization reactor, may be in a range of from 10 mm to 1000 mm, in a range of from 10 mm to 500 mm, or in a range of from 10 mm to 150 mm.

The temperature measuring step can be carried out in the catalyst feed part or in a desired part downstream of the catalyst feed part.

In the temperature measuring step, the temperature distribution is preferably measured at least in the circumferential direction of the catalyst feed part of the horizontal polymerization reactor, since the effect of suppressing the formation of aggregated polymers is improved, and the effect of improving the long-term operability is high.

The catalyst feed part subject to the temperature distribution measurement refers to a part in a range of 1/9 L or more and 2/9 L or less from the partition wall 10a when, as described above, the distance between the partition walls 10a and 10b shown in FIG. 1 is expressed as L and, in the direction from the partition wall 10a to the partition wall 10b, the position of the partition wall 10a and that of the partition wall 10b are expressed as 0 (L) and 1 L, respectively.

The preferable temperature distribution measuring position of the catalyst feed part is on the downstream side of the position where the catalyst component feed line 1 is placed, and it is a part in a range of 2/9 L or less from the position where the catalyst component feed line 1 is placed.

In the temperature measuring step, for calculating and monitoring the specific temperature distribution parameter described below, a temperature profile (T) is preferably created by plotting, as shown in FIG. 4, the temperatures measured at the measurement points in the circumferential direction on a circular coordinate system, using the radial coordinate r as temperature and the angular coordinate $\theta$ as the position of each of the measurement points in the circumferential direction. For example, FIG. 4 shows the result of measuring the temperature in the circumferential direction along the circumference of the placed horizontal polymerization reactor, starting from the apex 0 ($0\pi$) of the reactor to $2\pi$ in the agitator rotating direction (Dr).

By creating such a temperature profile as a result of the temperature distribution measurement, the degree and occurrence spot of an abnormal temperature can be visualized in real time; therefore, they can be easily monitored, and the production operation conditions can be appropriately controlled in accordance with the degree of and occurrence spot of the abnormal temperature. By setting the predetermined temperature distribution parameter value that should be monitored, it is sufficient that the operation condition is changed so that the temperature distribution parameter reaches the value or less, and an effective change in the operation conditions is possible.

4-1-2. Calculating step (Step (I-2))

In the calculating step, the temperature distribution parameter (A) defined by the following formula 1 is calculated from the temperature distribution obtained by the temperature measuring step:

$$A = Th \times \theta w \quad (Formula\ 1)$$

(where Th = Tp - Tave; Ti is the temperature (°C) of the i-th measurement point (where i is an integer of from 1 to n, and n is the number of the measurement points in the circumferential direction); Tp is the highest temperature (°C) among Ti's; Tave is the average temperature (°C) of Ti's; and $\theta w$ is the sum (rad) of the central angles of the adjacent measurement points which have a difference between Ti and Tave (Ti - Tave) of 0.5°C or more and which include the measurement point with Tp.)

As shown in FIG. 4, when there is one peak in the temperature distribution of the measurement points obtained by the temperature measuring step, Tp corresponds to the highest temperature among Ti's.

The average temperature (°C) of Ti's is calculated as Tave, and the difference between Tp and Tave is calculated as Th.

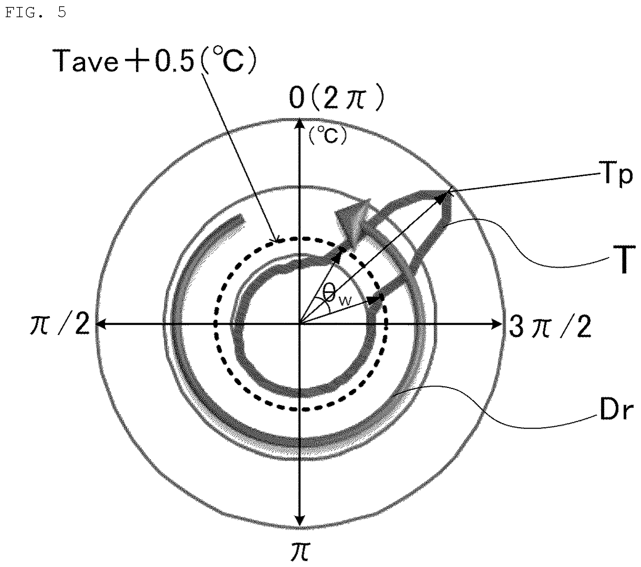

FIG. 5 is a view showing a method for obtaining $\theta w$ on the temperature profile (T) created by plotting the temperatures measured at the measurement points in the circumferential direction on the circular coordinate system, using the radial coordinate r as temperature and the angular coordinate $\theta$ as the position of each of the measurement points in the circumferential direction. As in FIG. 5, the sum $\theta w$ (rad) of the central angles of the adjacent measurement points which have a difference between Ti and Tave (Ti - Tave) of 0.5°C or more, can be obtained as the sum of the central angles of the adjacent measurement points which are in a range of Tave + 0.5°C or more and which include the measurement point with Tp.

The temperature distribution parameter (A) is calculated by the formula A = Th × $\theta w$ using the obtained Th and $\theta w$.

For example, there may be a case where there are two peaks (not shown) in the temperature distribution of the measurement points obtained by the temperature measuring step, that is, a case where there is another highest temperature $Tp_2$ which is not included in the range of the sum ($\theta w_1$) of the central angles of the adjacent measurement points which are in a range of Tave + 0.5°C or more and which include the measurement point with $Tp_1$ (the highest temperature among Ti's). In this case, the difference between $Tp_2$ and Tave is calculated as $Th_2$ of the highest temperature $Tp_2$. Then, $\theta w_2$ is obtained as the sum of the central angles of the adjacent measurement points which are in a range of Tave + 0.5°C or more and which include the measurement point with $Tp_2$.

For the peak of $Tp_1$, a temperature distribution parameter $A_1$ is calculated by the formula A = Th × $\theta w$ using the obtained $Th_1$ and $\theta w_1$. For the peak of $Tp_2$, a temperature distribution parameter $A_2$ is calculated in the same manner as above, using the obtained $Th_2$ and $\theta w_2$.

Even in the case where, for example, there are three or more peaks in the temperature distribution of the measurement points obtained by the temperature measuring step, the temperature distribution parameters $A_1$, $A_2$, $A_3$ and so on can be calculated for the three or more peaks, in the same manner as above.

The calculating step can be carried out by computer processing.

The computer processing is not particularly limited, and a conventionally-known processing method can be appropriately selected and used.

In the present invention, especially by monitoring the temperature distribution parameter A determined by the formula 1 (A = Th × $\theta w$) as an index, the correlation with the formation of aggregated polymers is easily obtained compared to the case of simply monitoring the temperature distribution alone; the operation conditions can be changed toward safety (toward the suppression of the formation of aggregated polymers) without relying on the senses or experience of an operator being in charge of production; and the formation of aggregated polymers can be effectively suppressed.

4-1-3. Monitoring step (Step (I-3))

In the monitoring step, the temperature distribution parameter (A) is monitored so that the parameter is prevented from exceeding the predetermined value.

In this step, the predetermined value is the upper limit value that is acceptable for suppressing the formation of aggregated polymers. The predetermined value may be set in advance, or it may be set in accordance with the production grade of the propylene-based polymer.

The production grade means the class of a propylene-based polymer having predetermined characteristics that are specified by catalyst species, properties (e.g., MFR) and the formulation of additives.

The occurrence of problems in the inside of the reactor during the production, such as the formation of large amounts of aggregated polymers, can be suppressed by monitoring the temperature distribution parameter (A) so that the parameter is prevented from exceeding the predetermined value.

The predetermined value for monitoring the temperature distribution parameter (A) can be appropriately determined from the viewpoint of whether or not, in the production of each propylene-based polymer production grade, the production can be continued considering a correlation between the temperature distribution parameter (A) and the status of occurrence of failures, from the viewpoint of the value as a product, etc.

The predetermined value of the temperature distribution parameter (A) can be set to $20\pi$ when the MFR is 70 (g/10 min), or it can be set to $10\pi$ when the MFR is 0.7 (g/10 min), for example.

The predetermined value of the temperature distribution parameter (A) is not particularly limited. Irrespective of the production grade, the predetermined value is preferably set in a range of from $0\pi$ to $30\pi$. The lower limit value of the predetermined value may be $5\pi$ or more, or it may be $10\pi$ or more. On the other hand, the upper limit value may be $25\pi$ or less, or it may be $20\pi$ or less.

Among the same production grades, depending on the operation situation of the immediately preceding production grade, season, weather, the length of continuous production time, lots, etc., there is a possible case where the temperature distribution parameter (A) does not change much during the continuous operation and does not exceed the predetermined value. In this case, it is sufficient to monitor the temperature distribution parameter (A) so as not to exceed the predetermined value during the continuous operation of a polymerization.

The monitoring method may be, for example, checking the calculated value of the temperature distribution parameter (A) so that it is prevented from exceeding the predetermined value set in advance, as well as the temperature profile (T) created by, as shown in FIG. 4, plotting the temperatures measured at the measurement points in the circumferential direction.

When there are two or more peaks in the temperature distribution of the measurement points obtained by the temperature measuring step, such as the case where there are three peaks in the temperature distribution, the predetermined values set for the temperature distribution parameters $A_1$, $A_2$ and $A_3$ for the three peaks may be the same or different.

The timing of the monitoring may be any timing, such as every 30 minutes, every 1 hour and every 4 hours.

For example, when the production grade is changed, the length of the monitoring intervals just after the change is preferably shorter. During the time when a relatively-stable, continuous operation is possible, the length of the monitoring intervals can be longer.

For the monitoring, a distributed control system (DCS) equipped with an instrument panel configured to show the calculated values of the temperature profile (T) and the temperature distribution parameter (A) can be used as a monitoring apparatus.

The instrument panel is not particularly limited, and a conventionally-known instrument panel can be appropriately selected and used.

Depending on the result of the monitoring step, the production method of the present invention optionally further comprises at least one selected from the group consisting of:

the condition controlling step (1) in which the production condition is controlled so that the temperature distribution parameter (A) is prevented from exceeding the predetermined value, and
the condition controlling step (2) in which, when the temperature distribution parameter (A) exceeds the predetermined value, the production condition is controlled so that the temperature distribution parameter (A) is equal to or less than the predetermined value.

That is, depending on the result of the monitoring step, the production method may include the condition controlling step (1), the condition controlling step (2) or the condition controlling steps (1) and (2).

In the present invention, depending on the result of the monitoring step, when the temperature distribution parameter (A) exceeds the predetermined value, the condition controlling step (2) in which the production condition is controlled so that the temperature distribution parameter (A) is equal to or less than the predetermined value, is required.

4-1-4. Condition controlling step (1) (Step (I-4))

In the monitoring step, when the temperature distribution parameter (A) nearly exceeds the predetermined value, the production condition may be controlled to decrease the temperature distribution parameter (A) so that the temperature distribution parameter (A) is prevented from exceeding the predetermined value.

An example of the case where the temperature distribution parameter (A) nearly exceeds the predetermined value, is such that the value of the temperature distribution parameter (A) calculated from the temperature distribution profile measured in real time, comes close to the predetermined value with time.

When the temperature distribution parameter (A) comes close to the predetermined value, for example, when the difference between the temperature distribution parameter (A) and the predetermined value reaches a value of $-5\pi$, the production condition may be controlled so that the temperature distribution parameter (A) is prevented from exceeding the predetermined value or is decreased. It is preferable that when the difference between the temperature distribution parameter (A) and the predetermined value reaches a value of 0, the production condition is controlled so that the temperature distribution parameter (A) is prevented from exceeding the predetermined value or is decreased.

As the method for controlling the production condition so that the temperature distribution parameter (A) is prevented from exceeding the predetermined value or is decreased, examples include, but are not limited to, reducing the peak height (that is, decreasing the maximum temperature) or narrowing the peak width (that is, narrowing the range with high temperature).

To control the production condition, for example, bringing the preset temperature of the reactor (that is, the polymer temperature in the reactor) close to the gas dew-point temperature of the gas phase, may be used as an index. More specifically, the temperature difference $\Delta T1$ (°C) (= Tx - Tz) between the temperature (Tx) of the area including the catalyst feed part and the dew point (Tz) of the mixed gas in the reactor, may be set to 0°C to 3.0°C.

To control the production condition, for example, increasing the rotational speed of the agitating mechanism may be also used as an index.

4-1-5. Condition controlling step (2) (Step (I-5))

In the monitoring step, the temperature distribution parameter (A) is preferably prevented from exceeding the predetermined value. When temperature distribution parameter (A) exceeds the predetermined value, failures may be solved by quickly controlling the production condition so that the temperature distribution parameter (A) is equal to or less than the predetermined value.

Even when the temperature distribution parameter (A) exceeds the predetermined value, failures can be solved by quickly controlling the production condition so that the temperature distribution parameter (A) is equal to or less than the predetermined value, in the case where the temperature distribution parameter (A) does not largely exceed the predetermined value or does not exceed the predetermined value for a long time, or Th and $\theta$w in the formula 1 are not large.

For example, the case where the temperature distribution parameter (A) does not largely exceed the predetermined value may be such that the temperature distribution parameter (A) is equal to or less than a value obtained by multiplying the predetermined value by 1.25 (the predetermined value $\times$ 1.25).

The case where the temperature distribution parameter (A) does not exceed the predetermined value for a long time, may be such that the time exceeding the predetermined value is 8 hours or less.

The case where Th in the formula 1 is not large may be such that Th is less than 20 (°C). The case where $\theta$w in the formula 1 is not large may be such that $\theta$w is less than $\pi/3.6$ (rad).

The target value for decreasing the temperature distribution parameter (A) may be equal to or less than a value obtained by multiplying the predetermined value of the temperature distribution parameter (A) by 0.75 (the predetermined value $\times$ 0.75), or it may be equal to or less than a value obtained by multiplying the predetermined value by 0.5 (the predetermined value $\times$ 0.5).

The method for controlling the production condition so that the temperature distribution parameter (A) is decreased lower the predetermined value, may be the same as the condition controlling step (1). To decrease the temperature distribution parameter (A) lower than the predetermined value, examples include, but are not limited to, reducing the peak height (that is, decreasing the maximum temperature) or narrowing the peak width (that is, narrowing the range with high temperature).

To control the production condition, for example, bringing the preset temperature of the reactor close to the gas dew-point temperature of the gas phase, may be used as an index. More specifically, the temperature difference $\Delta T1$ (°C) (= Tx - Tz) between the temperature (Tx) of the area including the catalyst feed part and the dew point (Tz) of the mixed gas in the reactor, may be set to 0°C to 3.0°C.

4-2. Second embodiment [Step group (II)]

In the second embodiment of the propylene-based polymer production method of the present invention, the method comprises:

the temperature measuring step in which a part of the temperature distribution of the cylindrical horizontal polymerization reactor in the circumferential direction, is measured so that the distance between adjacent measurement points is a central angle of $\pi/10$ (rad) or less,

a calculating step in which the temperature distribution parameter (As) defined by the following formula 2 is calculated from the temperature distribution obtained by the temperature measuring step, and

a monitoring step in which the temperature distribution parameter (As) is monitored so that the parameter is prevented from exceeding the predetermined value:

$$\mathtt{As} = \mathtt{Th_s} \times \theta\mathtt{w_s} \quad (\mathtt{Formula}\ 2)$$

(where $Th_s = Tp - Tref$; $Ti$ is the temperature (°C) of the i-th measurement point (where i is an integer of from 1 to n, and n is the number of the measurement points in the circumferential direction); $Tp$ is the highest temperature (°C) among $Ti$'s; $Tref$ is a predetermined reference temperature (°C); and $\theta w_s$ is the sum (rad) of the central angles of the adjacent measurement points which the difference between $Ti$ and $Tref$ ($Ti - Tref$) is equal to or more than the predetermined temperature and which include the measurement point with $Tp$.)

The method optionally further comprises at least one selected from the group consisting of:

a condition controlling step (1') in which the production condition is controlled so that the temperature distribution parameter (As) is prevented from exceeding the predetermined value, and

a condition controlling step (2') in which, when the temperature distribution parameter (As) exceeds the predetermined value, the production condition is controlled so that the temperature distribution parameter (As) is equal to or less than the predetermined value.

4-2-1. Temperature measuring step (Step (II-1))

In the temperature measuring step, a part of the temperature distribution of the cylindrical horizontal polymerization reactor in the circumferential direction, is measured so that the distance between adjacent measurement points is a central angle of $\pi/10$ (rad) or less.

For example, when a part that should be controlled in the temperature distribution of the cylindrical horizontal polymerization reactor in the circumferential direction, is clearly limited in accordance with the production grade of the propylene-based polymer, a part of the temperature distribution of the cylindrical horizontal polymerization reactor in the circumferential direction can be measured as in the second embodiment.

The means of measuring the temperature distribution used in this step may be the same as the first embodiment.

In the measurement of a part of the temperature distribution in the circumferential direction, the distance between the adjacent measurement points may be the same as the first embodiment.

The temperature measuring step can be carried out in the catalyst feed part or in any part downstream of the catalyst feed part.

In the temperature measuring step, the temperature distribution is preferably measured at least in the circumferential direction of the catalyst feed part of the horizontal polymerization reactor, since the effect of suppressing the aggregated polymer formation and the effect of improving the long-term operability are high.

The temperature distribution measuring position may be the same as the first embodiment.

As the measurement of a part of the circumferential direction of the cylindrical horizontal polymerization reactor in the temperature measuring step, examples include, but are not limited to, measuring only the range of from $3\pi/2$ to $2\pi$ (0) shown in FIG. 4 and measuring only the range of from $3\pi/2$ to $11\pi/6$ shown in FIG. 4, the ranges including $Tp$.

Even in the case of measuring only a part of the temperature distribution in the circumferential direction, for the purpose of calculating and monitoring the specific temperature distribution parameter, which will be described below, in the temperature measuring step, a temperature profile (T) is preferably created by plotting, as shown in FIG. 4, the temperatures measured at the measurement points in the circumferential direction on a circular coordinate system, using radial coordinate r as temperature and angular coordinate $\theta$ as the position of each of the measurement points in the circumferential direction.

By creating such a temperature profile as a result of the temperature distribution measurement, the degree and occurrence spot of an abnormal temperature can be easily monitored in real time, and the production conditions can be appropriately controlled in accordance with the degree of and occurrence spot of the abnormal temperature.

4-2-2. Calculating step (Step (II-2))

In the calculating step, the temperature distribution parameter (As) defined by the following formula 2 is calculated from the temperature distribution obtained by the temperature measuring step:

$$As = Th_s \times \theta w_s \quad \text{(Formula 2)}$$

(where $Th_s$ = Tp - Tref; Ti is the temperature (°C) of the i-th measurement point (where i is an integer of from 1 to n, and n is the number of the measurement points in the circumferential direction); Tp is the highest temperature (°C) among Ti's; Tref is the predetermined reference temperature (°C); and $\theta w_s$ is the sum (rad) of the central angles of the adjacent measurement points which the difference between Ti and Tref (Ti - Tref) is equal to or more than the predetermined temperature and which include the measurement point with Tp.)

As shown in FIG. 4, when there is one peak in the temperature distribution of the measurement points obtained by the temperature measuring step, Tp corresponds to the highest temperature among Ti's.

Tref is a predetermined reference temperature (°C). In accordance with the production grade, a reference temperature corresponding to Tave of the first embodiment can be set in advance as Tref.

For example, in the case of measuring only the range of from $3\pi/2$ to $2\pi$ (0) in FIG. 4 as a part of the circumferential direction of the cylindrical horizontal polymerization reactor, Tref can be the average value of the temperatures in the range of from $3\pi/2$ to $2\pi$ (0), or it can be the average value of the temperatures in the range of from $11\pi/6$ to $2\pi$ (0). In the case of measuring only the range of from $\pi$ to $2\pi$ (0) in FIG. 4 as a part of the circumferential direction of the cylindrical horizontal polymerization reactor, Tref can be the average value of the temperatures in the range of from $\pi$ to $3\pi/2$.

Then, the difference between Tp and Tref is calculated as $Th_s$.

In accordance with the production grade, a predetermined temperature corresponding to 0.5°C of the first embodiment can be set in advance as the predetermined temperature for the difference between Ti and Tref (Ti - Tref). The predetermined temperature for the difference between Ti and Tref (Ti - Tref) may be 0.5°C as with the first embodiment.

The sum $\theta w_s$ of the central angles of the adjacent measurement points which the difference between Ti and Tref (Ti - Tref) is equal to or more than the predetermined temperature, can be obtained in the same manner as $\theta w$ of the first embodiment.

From the obtained $Th_s$ and $\theta w_s$, the temperature distribution parameter (As) is calculated by the following formula: As = $Th_s \times \theta w_s$.

For example, even in the case where there are two or more peaks in the temperature distribution of the measurement points obtained by the temperature measuring step, the temperature distribution parameters $As_1$, $As_2$, $As_3$ and so on can be calculated for the two or more peaks, in the same manner as the first embodiment.

The calculating step can be carried out in the same manner as the first embodiment.

In the present invention, a part of the temperature distribution of the cylindrical horizontal polymerization reactor in the circumferential direction, is measured, and the temperature distribution parameter As determined by the formula 2 ($Ax = Th_s \times \theta w_s$) is monitored as an index. Therefore, the following advantage is obtained in addition to the advantages of the first embodiment: effective temperature control is possible while achieving labor saving, such as close control of the temperature distribution of especially a part in which a peak is likely to appear, without the whole temperature distribution control.

4-2-3. Monitoring step (Step (II-3))

The monitoring step of the second embodiment may be the same as the first embodiment.

4-2-4. Condition controlling step (1') (Step (II-4)) and Condition controlling step (2') (Step (II-5))

Depending on the result of the monitoring step, the production method optionally further comprises at least one selected from the group consisting of:

the condition controlling step (1') in which the production condition is controlled so that the temperature distribution parameter (As) is prevented from exceeding the predetermined value, and
the condition controlling step (2') in which, when the temperature distribution parameter (As) exceeds the predetermined value, the production condition is controlled so that the temperature distribution parameter (As) is equal to or less than the predetermined value.

That is, depending on the result of the monitoring step, the production method of the present invention may include the condition controlling step (1'), the condition controlling step (2') or the condition controlling steps (1') and (2').

In the present invention, depending on the result of the monitoring step, when the temperature distribution parameter (As) exceeds the predetermined value, the condition controlling step (2') in which the production condition is controlled so that the temperature distribution parameter (As) is equal to or less than the predetermined value, is required.

The condition controlling step (1') and condition controlling step (2') of the second embodiment may be the same as the condition controlling step (1) and condition controlling step (2) of the fist embodiment, respectively.

As described above, in the case where polymerization is carried out in the horizontal polymerization reactor, the particles of the propylene-based polymer move along the axis direction of the reactor while gradually growing, by two forces of the formation of the propylene-based polymer by the polymerization reaction and mechanical agitation, so that the flow pattern becomes a plug flow type. Therefore, the propylene-based polymer can be subjected to different temperature histories from the catalyst feed port to the powder discharge port in the reactor.

Adopting the technique according to the present invention becomes an effective method for, irrespective of the Ziegler catalyst and the metallocene catalyst, the suppression of a disordered polymerization reaction to be induced by local heat generation in the catalyst feed part, particularly the suppression of the aggregated polymer formation resulting from easy occurrence of a rapid polymerization rate in a random copolymerization of propylene and ethylene or an $\alpha$-olefin.

Also, by adopting the technique according to the present invention, the formation of the aggregated polymer in the reactor is suppressed, and it also becomes possible to further enhance production continuity and operation stability. Moreover, the catalyst activity is retained high and production costs can be suppressed, so that the technique is economical.

5. Propylene-based polymer produced in the present invention

The propylene-based polymer produced in the present invention encompasses [i] a propylene homopolymer, [ii] a random copolymer containing propylene and at least one kind of different $\alpha$-olefin, [iii] a block copolymer containing propylene and at least one kind of different $\alpha$-olefin, and [iv] a propylene-based polymer containing an olefin polymer component supported in a catalyst for olefin polymerization, which is obtained via a pre-polymerization step where a small amount of olefin is brought into contact with a catalyst for olefin polymerization, and the above [i], [ii] or [iii] polymerized using the pre-polymerization catalyst as a main component for the catalyst for propylene production. Hereinafter, the term "propylene-based polymer" is used with this meaning.

In the present invention, the produced propylene-based polymer may have a melt flow rate (MFR), which is measured at a temperature of 230°C and a load of 2.16 kg, of from 0.3 g/10 min to 150 g/10 min.

In the present invention, the melt flow rate is a value measured in accordance with JIS K7210 ("Plastics - Determination of the melt mass-flow rate (MFR) and melt volume-flow rate (MVR) of thermoplastics") in the test conditions of a temperature of 230°C and a load of 2.16 kgf.

The propylene-based polymer produced in the present invention may be a propylene-based polymer having a melting peak temperature (Tm) (hereinafter may be referred to as melting point) of 105°C or more and 167°C or less. when the melting point is remarkably lower than the above range, there is a possibility that a part of the polymer itself melts at an industrially possible polymerization temperature, making it difficult to maintain stable operation.

However, the production method of the present invention does not mean the exclusion of the production of a propylene-based polymer having a melting point other than such a melting point.

The propylene-based polymer having such a low melting point is preferably produced by using a catalyst in which a metallocene compound is supported on a support.

The most use can be made of the characteristics of the metallocene-based catalyst, i.e., a narrow crystalline and molecular weight distribution and small amounts of low crystalline/low molecular weight components, and it becomes possible to produce a polymer having excellent low-temperature heat-sealing properties, which is difficult to produce with the conventional Ziegler-Natta catalyst.

In the case where the produced polymer is a propyleneethylene random copolymer, the ethylene content in the copolymer may be controlled so that the melting point of the copolymer falls within a range of 105°C or more and 140°C or less. The ethylene content in the copolymer varies depending on the catalyst used. In the case of the metallocene-based catalyst, the ethylene content is generally in a range of from 1% by mass to 10% by mass.

In the present invention, the melting peak temperature (Tm) is a value measured by differential scanning calorimetry (DSC). More specifically, the melting peak temperature (Tm) is a peak temperature at the time when a sample is heated from room temperature to 230°C under a condition of 80°C/minute, kept at the temperature for 10 minutes, then cooled to 50°C at a rate of -10°C/minute, maintained at the temperature for 3 minutes, and then melted under a heating condition of 10°C/minute, using a DSC7 model differential scanning calorimeter manufactured by Perkin-Elmer Corporation, for example.

At that time, it is sufficient to control the value of a gas concentration molar ratio of ethylene to propylene (ethylene/propylene) in the reactor so as to obtain the above melting point. The value is in the range of preferably from 0.01 to 0.5, more preferably from 0.01 to 0.3, and still more preferably from 0.02 to 0.2.

Depending on the purpose, the propylene-based polymer may be produced using a multi-stage polymerization method. In this case, the propylene-based polymer produced at the first stage is preferably a propylene-based polymer having the above characteristics, and the component of the polymer produced at the second stage or later is not particularly limited.

The ethylene content in the propylene-based polymer is determined by NMR. In the case of using the multi-stage polymerization method, the propylene-based polymer polymerized at the first stage is a target. A specific method is shown below.

i) Measurement of ethylene content by NMR

The ethylene content of the obtained propylene-based polymer is determined by analyzing a 13C-NMR spectrum measured by a proton complete decoupling method according to the following conditions.

Model: GSX-400 manufactured by JEOL or an equivalent apparatus (carbon nuclear magnetic resonance frequency: 100 MHz or more)
Solvent: o-dichlorobenzene:deuterated benzene = 4:1 (volume ratio)
Concentration: 100 mg/ml
Temperature: 130°C
Pulse angle: 90°
Pulse interval: 15 seconds
Number of accumulation times: 5,000 times or more

ii) Spectrum

Assignment of the spectrum can be performed with reference to Macromolecules, 17, 1950 (1984), for example. The assignment of the spectrum measured under the above conditions is as shown below. The symbols such as $S\alpha\alpha$ are in accordance with the notation of Carman et al. (Macromolecules, 10, 536 (1977)), and P, S and T represent methyl carbon, methylene carbon and methine carbon, respectively.

[Table 1]

**Table 1**

| Chemical Shift (ppm) | Assignment |
|---|---|
| 45 to 48 | $S\alpha\alpha$ |
| 37.8 to 37.9 | $S\alpha\gamma$ |
| 37.4 to 37.5 | $S\alpha\delta$ |
| 33.1 | $T\delta\delta$ |
| 30.9 | $T\beta\delta$ |
| 30.6 | $S\gamma\gamma$ |
| 30.2 | $S\gamma\delta$ |
| 29.8 | $S\delta\delta$ |
| 28.7 | $T\beta\beta$ |
| 27.4 to 27.6 | $S\beta\delta$ |
| 24.4 to 24.7 | $S\beta\beta$ |
| 19.1 to 22.0 | P |

iii) Calculation of ethylene content

Hereinafter, when "P" is a propylene unit in a copolymer chain and "E" is an ethylene unit, there may be present 6 kinds of triads of PPP, PPE, EPE, PEP, PEE and EEE in the chain. As described in Macromolecules, 15, 1150 (1982) and the like, the concentration of these triads and the peak intensity of the spectrum are linked by the following relational formulae (1) to (6).

$$[PPP] = k \times I(T\beta\beta) \quad (1)$$

$$[PPE] = k \times I(T\beta\delta) \quad (2)$$

$$[EPE] = k \times I(T\delta\delta) \quad (3)$$

$$[PEP] = k \times I(S\beta\beta) \quad (4)$$

$$[PEE] = k \times I(S\beta\delta) \quad (5)$$

$$[EEE] = k \times \{I(S\delta\delta) / 2 + I(S\gamma\delta) / 4\} \quad (6)$$

Here, [ ] represents the fraction of each triad. For example, [PPP] is the fraction of the PPP triad in all the triads. Therefore,

$$[PPP] + [PPE] + [EPE] + [PEP] + [PEE] + [EEE] = 1$$

$$(7).$$

Moreover, k is a constant, and I represents spectrum intensity. For example, $I(T\beta\beta)$ means the intensity of a peak of 28.7 ppm which is assigned to $T\beta\beta$.

By using the above relational formulae (1) to (7), the fraction of each triad is determined. In addition, the ethylene content is determined by the following formula.

Ethylene content (% by mol) = ([PEP] + [PEE] + [EEE]) $\times$ 100

To accurately determine the ethylene content, it is necessary to consider peaks derived from a small amount of propylene irregular bonds (2,1-bond and/or 1,3-bond) and include them in calculation. However, since it is difficult to perform complete separation or identification of the peaks derived from the irregular bonds, and since the amount of the irregular bonds is small, the ethylene content is determined using the relational formulae of the above (1) to (7) on the assumption that the irregular bonds are not contained.

Conversion of the ethylene content in % by mol into the ethylene content in % by mass is performed using the following formula.

Ethylene content (% by mass) = (28 $\times$ X / 100) / {28 $\times$ X / 100 + 42 $\times$ (1 - X / 100)} $\times$ 100 (where X is the ethylene content in terms of % by mol).

Examples

Hereinafter, the present invention will be described in more detail, with reference to examples and comparative examples. The present invention is not limited to these examples.

<Measurement method of physical properties and apparatus>

(1) Melt flow rate (MFR)

The melt index values of polypropylene-based polymers are measured in accordance with JIS-K-7210 at a temperature of 230°C and a load of 2.16 kg.

(2) Amount of aggregated polymer

A polymer product was sieved through a sieve with 1,200 $\mu$m square openings, and the percent (% by weight) of the powder that did not pass through the sieve was taken as the amount of aggregated polymer.

<Reference Example 1>

In the production of a propylene-based polymer having an MFR of 70 (g/10 min), the temperature distribution parameter (A) and the amount of the aggregate sampled at that time were obtained with time (every 8 hours). From the operating data for the past 96 hours, the correlation between the temperature distribution parameter (A) and the amount of the aggregate at that time was obtained.

(1) Production of pre-polymerization catalyst

The production of a pre-polymerization catalyst was carried out in the same manner as Example 1 in JP-A No. 2011-116979.

(2) Polymerization

The polymerization is explained with reference to the schematic explanatory view shown in FIG. 1. Using one horizontal polymerization reactor, gas phase polymerization of propylene was carried out. The horizontal polymerization reactor 10 is a continuous horizontal polymerization reactor having a length-to-inner diameter ratio of 5.1 (L/D = 5.1), having an inner volume of 0.1 m$^3$, and being equipped with an agitator.

Here, the position of the sign 12 (partition wall 10a) shown in FIG. 1 is taken as the upstream end of the reactor. The rotational speed of the agitating mechanism was 28 rpm.

After the inside of the horizontal polymerization reactor 10 was substituted with nitrogen gas, 29 kg of seed powder was introduced therein, and nitrogen gas was allowed to flow through the reactor for 3 hours. Then, the reactor temperature was increased while introducing propylene and hydrogen. At the time when polymerization conditions were ready, the pre-polymerization catalyst obtained above was continuously fed at a rate of 0.125 g/hr as a solid component from the catalyst component feed line 1 placed at the position 255 mm apart from the upstream end of the reactor, and a 7% by weight n-hexane solution of triethylaluminum was continuously fed at a rate of 27 mmol/hr from the catalyst component feed line 2 placed at the position 160 mm apart from the upstream end of the reactor. Moreover, propylene was fed so that the ratio of hydrogen concentration to propylene concentration in the reactor 10 was maintained at 0.017; thermometers for measuring the inside of the reactor were placed at distances of 160 mm, 330 mm, 690 mm, 855 mm and 1200 mm from the upstream end, and the area sections were controlled and maintained at 59°C, 59°C, 62°C, 64°C and 65°C, respectively; and the polymerization pressure in the horizontal polymerization reactor 10 was maintained at 2.2 MPaG. Also, hydrogen was continuously fed from the raw material feed line 4. As shown in FIG. 2, the thermometers 34-1 and 34-2 to be placed in the area section (Z1) including the catalyst feed part were placed at the positions of 1/9.62 L and 1/4.67 L of the length L of the reactor from the upstream end of the reactor, respectively. At this time, the dew point (Tz) of the mixed gas in the reactor was 57.2°C, and the temperature difference ΔT1 between the temperature (Tx) of the polymer particles in the area section including the catalyst feed part, which was 59°C, and the dew point (Tz) of the mixed gas in the reactor, which was 57.2°C, was 1.8°C. The temperature (Tx) of the polymer particles in the area section including the catalyst feed part was obtained from the thermometers 34-1 and 34-2.

Meanwhile, on the outer surface of the cylindrical horizontal polymerization reactor, the temperature distribution of the catalyst feed part in the circumferential direction (full circle) was measured by use of a fiber optic thermometer. The temperature distribution measurement in the circumferential direction (full circle) was carried out so that the distance between the adjacent measurement points was a central angle of π/32 (rad). In the temperature distribution measurement in the circumferential direction (full circle), the distance between the adjacent measurement points was approximately 20 mm.

An unreacted gas discharged from the horizontal polymerization reactor 10 was discharged through the unreacted gas discharge line 13 to the outside of the reactor, cooled and condensed in the recycle drum 11, and then recycled to the horizontal polymerization reactor 10 through the liquefied monomer-containing liquid feed line 19 and the raw material mixed gas feed line 18.

The reaction heat was removed by the vaporization heat of the liquefied monomer-containing liquid fed from the liquefied monomer-containing liquid feed line 19. To the area section including the catalyst feed part, the liquefied monomer-containing liquid was fed from the liquefied monomer-containing liquid feed line 19 at a rate of 54.4 kg/hour.

A polymer powder was continuously discharged from the horizontal polymerization reactor 10 through the polymer discharge line 21 so that 35 kg of the formed propylene-based polymer was retained in the horizontal polymerization reactor 10. Each gas was separated from the discharged powder by the gas recovering apparatus 22, and the powder part was discharged into the powder recovering apparatus 23.

(3) Correlation between the temperature distribution parameter

(A) and the amount of the aggregated polymer at that time

The temperature distribution parameter (A) calculated from the temperature distribution measurement and the amount of the aggregated polymer contained in the polymer discharged from the horizontal polymerization reactor 10 during the temperature distribution measurement, were obtained. Then, from the operating data for the past 96 hours, the correlation between the temperature distribution parameter (A) and the amount of the aggregated polymer at that time were obtained.

From the correlation between the temperature distribution parameter (A) and the amount of the aggregated polymer at that time, the predetermined value of the temperature distribution parameter (A) of the propylene-based polymer production grade was set to $20\pi$.

<Reference Example 2>

In the production of a propylene-based polymer having an MFR of 0.7 (g/10 min), the temperature distribution parameter (A) and the amount of the aggregate sampled at that time were obtained with time (every 8 hours). From the operating data for the past 96 hours, the correlation between the temperature distribution parameter (A) and the amount of the aggregate at that time was obtained.

(1) Production of pre-polymerization catalyst

The production of a pre-polymerization catalyst was carried out in the same manner as Example 1 in JP-A No. 2011-116979.

(2) Polymerization

Polymerization was carried out in the same manner as Reference Example 1, except that the MFR condition was changed from 70 (g/10 min) to 0.7 (g/10 min).

(3) Correlation between the temperature distribution parameter

(A) and the amount of the aggregated polymer at that time

The temperature distribution parameter (A) calculated from the temperature distribution measurement and the amount of the aggregated polymer contained in the polymer discharged from the horizontal polymerization reactor 10 during the temperature distribution measurement, were obtained. Then, from the operating data for the past 96 hours, the correlation between the temperature distribution parameter (A) and the amount of the aggregated polymer at that time were obtained.

From the correlation between the temperature distribution parameter (A) and the amount of the aggregated polymer at that time, the predetermined value of the temperature distribution parameter (A) of the propylene-based polymer production grade was set to $10\pi$.

<Comparative Example 1>

The production of a propylene-based polymer was carried out in the same manner as Reference Example 1.
After a lapse of 8 hours from the start of the operation, the temperature distribution parameter (A) of the propylene-based polymer production grade exceeded the predetermined value: $20\pi$. However, the production was continued for 24 hours without any change. The dew point (Tz) of the mixed gas in the reactor at that time was 60.0°C, and the temperature (Tx) of the polymer particles in the area section including the catalyst feed part was 63°C.
The propylene-based polymer finally obtained (obtained after 32 hours) had an aggregate amount of 0.54% by weight.

<Example 1>

The production of a propylene-based polymer was carried out in the same manner as Reference Example 1. The temperature distribution measurement and the calculation of the temperature distribution parameter (A) were carried out with time (every 8 hours).
After a lapse of 24 hours from the start of the operation, the temperature distribution parameter (A) of the propylene-based polymer production grade came close to the predetermined value: $20\pi$. Since the dew point (Tz) of the mixed gas in the reactor at that time was 62.0°C and the temperature (Tx) of the polymer particles in the area section including the catalyst feed part was 63°C, Tx was controlled to be 62.3°C. As a result, the temperature distribution parameter (A) decreased to $3.3\pi$. The production was further continued up to 24 hours.

The finally obtained propylene-based polymer had an aggregate amount of 0% by weight.

<Example 2>

The production of a propylene-based polymer was carried out in the same manner as Reference Example 1. The temperature distribution measurement and the calculation of the temperature distribution parameter (A) were carried out with time (every 8 hours).

After a lapse of 8 hours from the start of the operation, the temperature distribution parameter (A) of the propylene-based polymer production grade exceeded the predetermined value: $20\pi$. Since the dew point (Tz) of the mixed gas in the reactor at that time was 60.1°C and the temperature (Tx) of the polymer particles in the area section including the catalyst feed part was 63°C, Tx was controlled to be 60.5°C. As a result, the temperature distribution parameter (A) decreased to $5.4\pi$. The production was further continued up to 24 hours.

The finally obtained propylene-based polymer had an aggregate amount of 0% by weight.

<Comparative Example 2>

The production of a propylene-based polymer was carried out in the same manner as Reference Example 2.

After a lapse of 8 hours from the start of the operation, the temperature distribution parameter (A) of the propylene-based polymer production grade exceeded the predetermined value: $10\pi$. However, the production was continued for 24 hours without any change. The dew point (Tz) of the mixed gas in the reactor at that time was 61.3°C, and the temperature (Tx) of the polymer particles in the area section including the catalyst feed part was 63°C.

The finally obtained propylene-based polymer had an aggregate amount of 0.63% by weight.

<Example 3>

The production of a propylene-based polymer was carried out in the same manner as Reference Example 2. The temperature distribution measurement and the calculation of the temperature distribution parameter (A) were carried out with time (every 8 hours).

After a lapse of 8 hours from the start of the operation, the temperature distribution parameter (A) of the propylene-based polymer production grade exceeded the predetermined value: $10\pi$. Since the dew point (Tz) of the mixed gas in the reactor at that time was 62.0°C and the temperature (Tx) of the polymer particles in the area section including the catalyst feed part was 63°C, Tx was controlled to be 62.4°C. As a result, the temperature distribution parameter (A) decreased to $2.63\pi$. The production was further continued up to 24 hours.

The finally obtained propylene-based polymer had an aggregate amount of 0.3% by weight.

<Application example: Example of long-term operation>

First, the production of a propylene-based polymer was carried out in the same manner as Example 1. The temperature distribution measurement and the calculation of the temperature distribution parameter (A) were carried out with time (every 8 hours).

The temperature distribution parameter (A) was monitored so that the parameter was prevented from exceeding the predetermined value of the temperature distribution parameter (A) of the propylene-based polymer production grade of Example 1. When the temperature distribution parameter (A) came close to the predetermined value, the production condition or conditions were controlled so that the temperature distribution parameter (A) was prevented from exceeding the predetermined value. When the temperature distribution parameter (A) exceeded the predetermined value, the production condition or conditions were controlled so that the temperature distribution parameter (A) was equal to or less than the predetermined value. The production was continued for up to one week (168 hours). Then, while maintaining the continuous operation, the polymerization conditions were changed to switch to the production of another propylene-based polymer production grade that was different in index, and the temperature distribution parameter (A) was monitored so that the temperature distribution parameter (A) of the propylene-based polymer production grade was prevented from exceeding the predetermined value. As in Example 1, when the temperature distribution parameter (A) came close to the predetermined value thereof, the production condition or conditions were controlled so that the temperature distribution parameter (A) was prevented from exceeding the predetermined value, and when the temperature distribution parameter (A) exceeded the predetermined value, the production condition or conditions were controlled so that the temperature distribution parameter (A) was equal to or less than the predetermined value. The production was continued up to 3 days (72 hours). Then, while maintaining the continuous operation, switching to the production of another propylene-based polymer production grade was carried out in the same manner as above. The production was continued by monitoring the temperature distribution parameter (A) so that the temperature distribution parameter (A) of the propylene-based polymer production grade was prevented from exceeding the predetermined value and, as needed, by controlling the production condition(s) so that the temperature distribution parameter (A) was prevented from exceeding the predetermined value or was equal to or less than the predetermined value. A long-term continuous operation of 1300 hours or more was achieved without forming a lot of aggregated polymer by, as just described, changing the propylene-based polymer production grade to another grade while maintaining the continuous operation and by continuously monitoring the temperature distribution parameter (A) using the predetermined value in accordance with the production grade.

Reference Signs List

1. Catalyst component feed line
2. Catalyst component feed line
3. Raw material monomer feed line
4. Raw material feed line (such as hydrogen)
5, 6. Line
10. Horizontal polymerization reactor
10a, 10b. Partition wall
11. Recycle drum
12. Reactor upstream end
13. Unreacted gas discharge line
14. Reactor downstream end
15. Condenser
16. Compressor
18, 18-1, 18-2, 18-3, 18-4, 18-5. Raw material mixed gas feed line
19, 19-1, 19-2, 19-3, 19-4, 19-5. liquefied monomer-containing liquid feed line
20. Agitator
20a. Horizontal axis
20b. Agitating blade
21. Polymer discharge line
22. Gas recovering apparatus
23. Polymer recovering apparatus
30. Horizontal polymerization reactor
31. Catalyst component feed line
32. Partition wall
33. Partition wall
34-1, 34-2, 34-3, 34-3 ... 34-i. Thermometer
35. Horizontal axis

**Claims**

1. A method for producing a propylene-based polymer,

   wherein a propylene-based polymer is polymerized from propylene or propylene and an α-olefin other than propylene in the presence of a catalyst with a cylindrical horizontal polymerization reactor comprising an agitating mechanism rotatable around a horizontal axis inside the reactor, by a continuous gas phase polymerization which removes reaction heat by vaporization heat of a liquefied monomer-containing liquid; the catalyst is fed from an upper part of one end of the horizontal polymerization reactor; and the propylene-based polymer is discharged from a lower part of the other end of the horizontal polymerization reactor;
   wherein the method comprises:

   a temperature measuring step in which a temperature distribution of the cylindrical horizontal polymerization reactor in a circumferential direction, is measured so that a distance between adjacent measurement points is a central angle of $\pi/10$ (rad) or less,
   a calculating step in which a temperature distribution parameter (A) defined by the following formula 1 is calculated from the temperature distribution obtained by the temperature measuring step, and

a monitoring step in which the temperature distribution parameter (A) is monitored so that the parameter is prevented from exceeding a predetermined value; and
wherein the method optionally further comprises at least one selected from the group consisting of:

a condition controlling step (1) in which a production condition is controlled so that the temperature distribution parameter (A) is prevented from exceeding the predetermined value, and
a condition controlling step (2) in which, when the temperature distribution parameter (A) exceeds the predetermined value, the production condition is controlled so that the temperature distribution parameter (A) is equal to or less than the predetermined value:

$$A = Th \times \theta w \quad (Formula\ 1)$$

(where $Th = Tp - Tave$; Ti is a temperature (°C) of an i-th measurement point (where i is an integer of from 1 to n, and n is a number of the measurement points in the circumferential direction); Tp is a highest temperature (°C) among Ti's; Tave is an average temperature (°C) of Ti's; and $\theta w$ is a sum (rad) of central angles of adjacent measurement points which have a difference between Ti and Tave (Ti - Tave) of 0.5°C or more and which include the measurement point with Tp.)

2. A method for producing a propylene-based polymer,

wherein a propylene-based polymer is polymerized from propylene or propylene and an $\alpha$-olefin other than propylene in the presence of a catalyst with a cylindrical horizontal polymerization reactor comprising an agitating mechanism rotatable around a horizontal axis inside the reactor, by a continuous gas phase polymerization which removes reaction heat by vaporization heat of a liquefied monomer-containing liquid; the catalyst is fed from an upper part of one end of the horizontal polymerization reactor; and the propylene-based polymer is discharged from a lower part of the other end of the horizontal polymerization reactor;
wherein the method comprises:

a temperature measuring step in which a part of a temperature distribution of the cylindrical horizontal polymerization reactor in a circumferential direction, is measured so that a distance between adjacent measurement points is a central angle of $\pi/10$ (rad) or less,
a calculating step in which a temperature distribution parameter (As) defined by the following formula 2 is calculated from the temperature distribution obtained by the temperature measuring step, and
a monitoring step in which the temperature distribution parameter (As) is monitored so that the parameter is prevented from exceeding a predetermined value; and
wherein the method optionally further comprises at least one selected from the group consisting of:

a condition controlling step (1') in which a production condition is controlled so that the temperature distribution parameter (As) is prevented from exceeding the predetermined value, and
a condition controlling step (2') in which, when the temperature distribution parameter (As) exceeds the predetermined value, the production condition is controlled so that the temperature distribution parameter (As) is equal to or less than the predetermined value:

$$As = Th_s \times \theta w_s \quad (Formula\ 2)$$

(where $Th_s = Tp - Tref$; Ti is a temperature (°C) of an i-th measurement point (where i is an integer of from 1 to n, and n is a number of the measurement points in the circumferential direction); Tp is a highest temperature (°C) among Ti's; Tref is a predetermined reference temperature (°C); and $\theta w_s$ is a sum (rad) of central angles of adjacent measurement points which a difference between Ti and Tref (Ti - Tref) is equal to or more than a predetermined temperature and which include the measurement point with Tp.)

3. The method for producing the propylene-based polymer according to Claim 1 or 2, wherein, in the temperature measuring step, the temperature distribution is measured at least in the circumferential direction of a catalyst feed part of the horizontal polymerization reactor.

4. The method for producing the propylene-based polymer according to any one of Claims 1 to 3, wherein, in the temperature measuring step, the temperature distribution is measured on an outer surface of the horizontal polymerization reactor.

5. The method for producing the propylene-based polymer according to any one of Claims 1 to 4, wherein, in the temperature measuring step, the temperature distribution is measured so that the distance between the adjacent measurement points is in a range of from 10 mm to 1000 mm.

6. The method for producing the propylene-based polymer according to any one of Claims 1 to 5, wherein, in the temperature measuring step, a temperature profile is created by plotting the temperatures measured at the measurement points in the circumferential direction on a circular coordinate system, using radial coordinate r as temperature and angular coordinate θ as a position of each of the measurement points in the circumferential direction.

7. The method for producing the propylene-based polymer according to any one of Claims 1 to 6, wherein the predetermined value is set in a range of from $0\pi$ to $30\pi$.

8. The method for producing the propylene-based polymer according to any one of Claims 1 to 7, wherein a rotational speed of the agitating mechanism is from 5 rpm to 50 rpm.

9. The method for producing the propylene-based polymer according to any one of Claims 1 to 8, wherein a temperature difference $\Delta T1$ (°C) (= Tx - Tz) between a temperature (Tx) of an area of the horizontal polymerization reactor, the area including the catalyst feed part, and a dew point (Tz) of a mixed gas in the reactor is from 0°C to 3.0°C.

10. The method for producing the propylene-based polymer according to any one of Claims 1 to 9, wherein the catalyst is a Ziegler-based or metallocene-based polymerization catalyst.

11. The method for producing the propylene-based polymer according to any one of Claims 1 to 10, wherein the produced propylene-based polymer has a melt flow rate (MFR), which is measured at a temperature of 230°C and a load of 2.16 kg, of from 0.3 g/10 min to 150 g/10 min.

FIG. 1

FIG. 2

FIG. 3

FIG. 4

FIG. 5

## INTERNATIONAL SEARCH REPORT

<table>
<tr><td colspan="2">International application No.</td></tr>
<tr><td colspan="2">PCT/JP2024/009514</td></tr>
</table>

**A.    CLASSIFICATION OF SUBJECT MATTER**

*C08F 2/01*(2006.01)i; *C08F 2/34*(2006.01)i; *C08F 210/06*(2006.01)i
FI:    C08F2/01; C08F2/34; C08F210/06

According to International Patent Classification (IPC) or to both national classification and IPC

**B.    FIELDS SEARCHED**

Minimum documentation searched (classification system followed by classification symbols)

C08F.B01J19

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2011-148980 A (JAPAN POLYPROPYLENE CORP.) 04 August 2011 (2011-08-04) claims, paragraph [0106], fig. 1 | 1-11 |
| Y | JP 58-180920 A (THE BABCOCK & WILCOX CO.) 22 October 1983 (1983-10-22) claims, p. 3, lower right column | 1-11 |
| A | JP 49-124498 A (HITACHI, LTD.) 28 November 1974 (1974-11-28) entire text | 1-11 |
| A | JP 11-193302 A (MITSUI CHEMICALS, INC.) 21 July 1999 (1999-07-21) entire text | 1-11 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **25 April 2024** | **21 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/009514**

| Patent document cited in search report | | | Publication date (day/month/year) | Patent family member(s) | | | Publication date (day/month/year) |
|---|---|---|---|---|---|---|---|
| JP | 2011-148980 | A | 04 August 2011 | US | 2012/0302716 | A1 | |
| | | | | claims, paragraphs [0230]-[0233], fig. 1 | | | |
| | | | | WO | 2011/052757 | A1 | |
| | | | | EP | 2495260 | A1 | |
| | | | | CN | 102597013 | A | |
| JP | 58-180920 | A | 22 October 1983 | US | 4440509 | A | |
| | | | | claims, column 2, lines 64-68 | | | |
| JP | 49-124498 | A | 28 November 1974 | US | 3909643 | A | |
| | | | | entire text | | | |
| JP | 11-193302 | A | 21 July 1999 | US | 2003/0027949 | A1 | |
| | | | | entire text | | | |
| | | | | EP | 906782 | A1 | |
| | | | | CN | 1214958 | A | |
| | | | | KR | 10-1999-0036918 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11209415 A
- JP 3180305 B
- JP H11189603 A
- JP H794485 B
- WO 200042081 A
- JP 2009073890 A
- JP 2011148980 A
- JP 2001521144 W
- JP 2012092275 A
- JP 2011153287 A
- JP 2017095606 A
- JP 2011116979 A

**Non-patent literature cited in the description**

- **CARMAN et al.** *Macromolecules*, 1977, vol. 10, 536
- *Macromolecules*, 1982, vol. 15, 1150